# EUROPEAN PATENT SPECIFICATION

(11) **EP 4 199 574 B1**
(45) Date of publication and mention of the grant of the patent: **04.11.2026**
(21) Application number: 21859921.5
(22) Date of filing: 09.07.2021
(51) Int. Cl.: H04W 28/02, H04B 7/06, H04L 5/00, H04L 1/00, H04L 1/06, H04L 27/26

(54) **DATA FRAGMENTATION ANALYSIS METHOD AND RELATED APPARATUS**
DATENFRAGMENTIERUNGSANALYSEVERFAHREN UND ZUGEHÖRIGE VORRICHTUNG
PROCÉDÉ D'ANALYSE DE FRAGMENTATION DE DONNÉES ET APPAREIL ASSOCIÉ

(30) Priority: 27.08.2020 CN 202010880699
(43) Date of publication of application: 21.06.2023
(73) Proprietor: Huawei Technologies Co., Ltd., Shenzhen, Guangdong 518129 (CN)
(72) Inventor: HU, Mengshi, Shenzhen, Guangdong 518129 (CN); YU, Jian, Shenzhen, Guangdong 518129 (CN); GAN, Ming, Shenzhen, Guangdong 518129 (CN)
(74) Representative: Epping - Hermann - Fischer
(86) International application number: PCT/CN2021/105615
(87) International publication number: WO 2022/042081

(56) References cited:
- CN-A- 110 730 050
- CN-A- 110 768 757
- US-A1- 2017 181 090
- US-B2- 10 536 196
- US-B2- 10 536 196
- "High Efficiency (HE) PHY specification", vol. 802.11ax drafts, no. D3.0, 1 June 2018 (2018-06-01), pages 1 - 279, XP068137591, Retrieved from the Internet <URL:www.ieee802.org/11/private/Draft_Standards/11ax/TGax_Cl_28.rtf> [retrieved on 20180601]

## Description

This application claims priority to Chinese Patent Application No. 202010880699.0, filed with the China National Intellectual Property Administration on August 27, 2020 and entitled "DATA SEGMENT PARSING METHOD AND RELATED APPARATUS".

### TECHNICAL FIELD

This application relates to the field of wireless local area network technologies, and in particular, to a data segment parsing method and a related apparatus.

### BACKGROUND

With development of a wireless local area network (wireless local area network, WLAN), an orthogonal frequency division multiple access (orthogonal frequency division multiple access, OFDMA) technology is newly introduced, in which an entire bandwidth is divided into a plurality of resource units (resource unit, RU). In other words, a frequency domain resource is allocated in a form of resource unit instead of channel. For example, a 20 MHz channel may include a plurality of resource units (resource unit, RU) such as a 26-tone RU, a 52-tone RU, a 106-tone RU, and the like. Tone indicates a quantity of subcarriers. In addition, the RU may alternatively be a 242-tone RU, a 484-tone RU, a 996-tone RU, or the like. These RUs each include one or two segments of consecutive frequency domain resources, each segment of consecutive frequency domain resources includes a plurality of consecutive subcarriers, and the two segments of consecutive frequency domain resources are noncontiguous. Such RU may be understood as a contiguous RU. A manner of allocating contiguous RUs is excessively simple, and transmission reliability is relatively low.
US 10 536 196 B2 discloses a method for multiple resource unit (RU) allocation for OFDMA WLAN wherein a transmitter may parse an encoded bit stream into a plurality of spatial streams. The transmitter may determine an allocation of encoded bits of the plurality of spatial streams to a plurality of interleavers and may allocate the encoded bits to the plurality of interleavers based on the determined allocation.
US 2017/181090 A1 discloses a method for communication in accordance with wake-up messages, wherein a station may transmit, to an access point a wake-up configuration message that indicates a resource unit in which the station intends to monitor for wake-up messages from the access point during a sleep period.

### SUMMARY

The invention is defined by the appended claims. Embodiments of this application provide a data segment parsing method, a transmitter, and a related product.

### BRIEF DESCRIPTION OF DRAWINGS

FIG. 1 is a schematic diagram of a network architecture of a communication system according to an embodiment of this application;
FIG. 2 is a schematic diagram of a structure of a communication apparatus according to an embodiment of this application;
FIG. 3 is a schematic diagram of a structure of a chip according to an embodiment of this application;
FIG. 4A is a schematic diagram of a possible resource unit allocation manner in a case of 20 MHz;
FIG. 4B is a schematic diagram of a possible resource unit allocation manner in a case of 40 MHz;
FIG. 4C is a schematic diagram of a possible resource unit allocation manner in a case of 80 MHz;
FIG. 5A-1 and FIG. 5A-2 are a schematic diagram of a transmission procedure of a transmitter;
FIG. 5B-1 and FIG. 5B-2 are a schematic diagram of another transmission procedure of a transmitter;

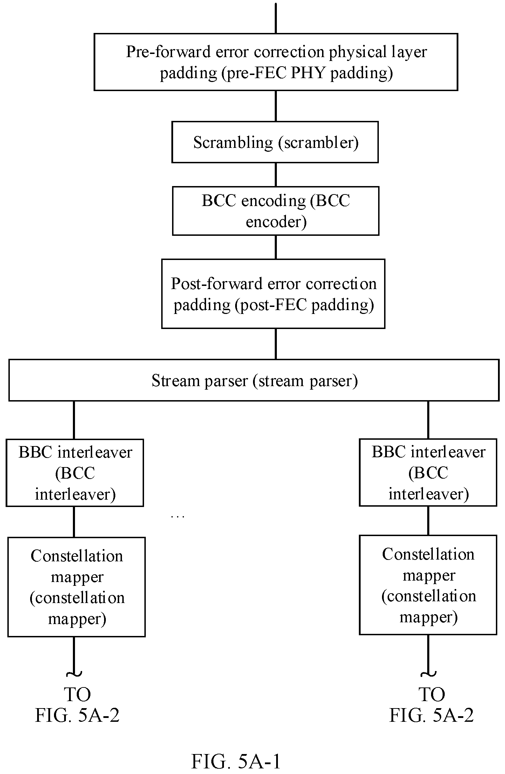

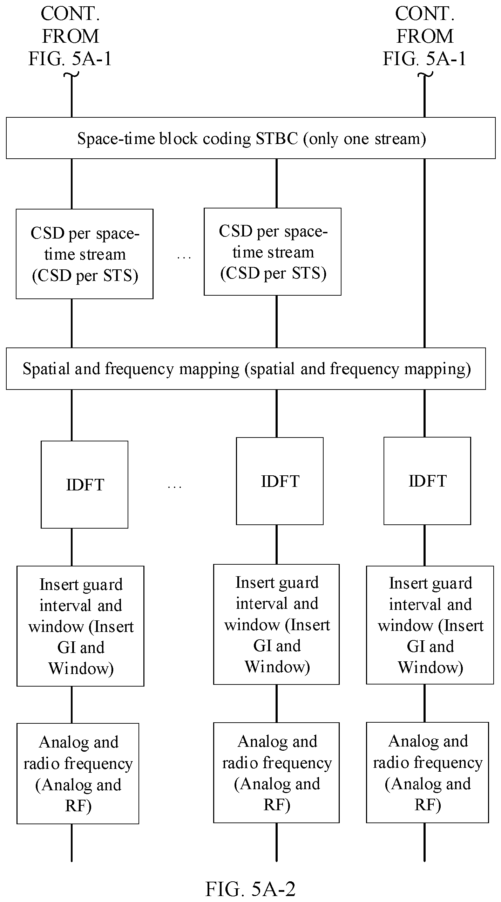

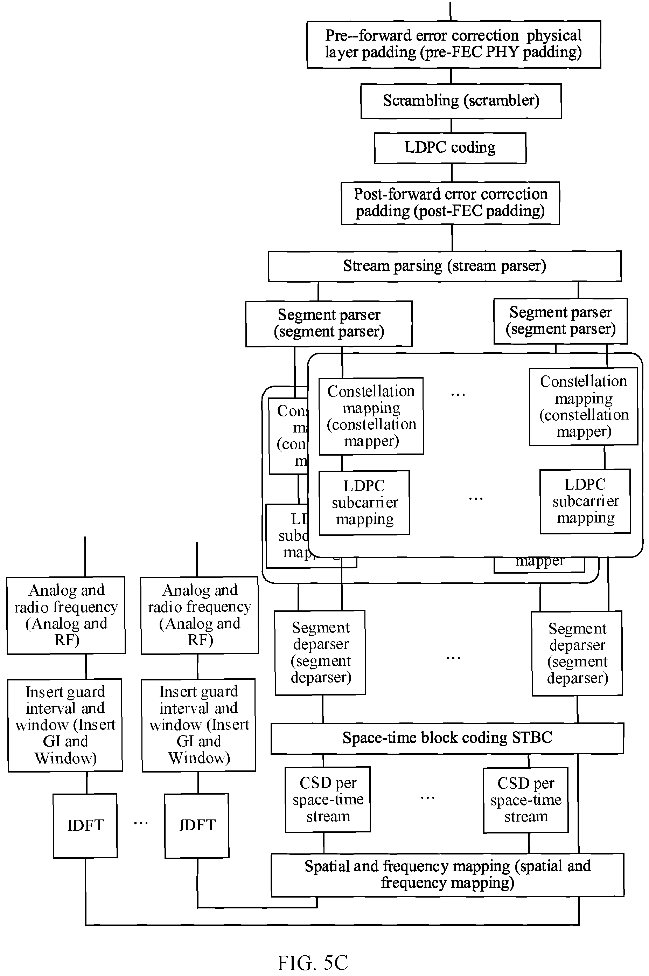

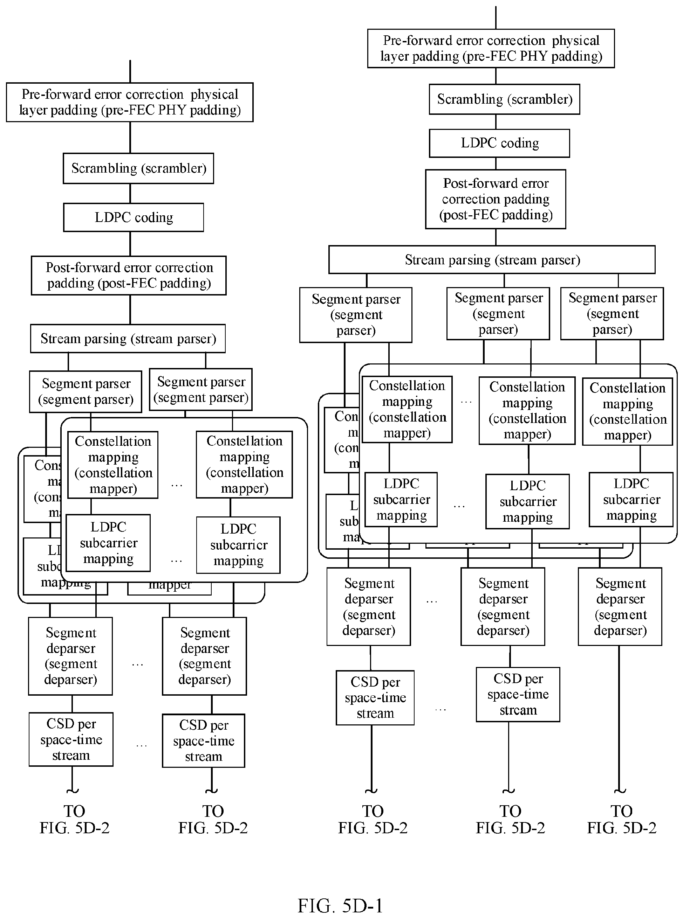

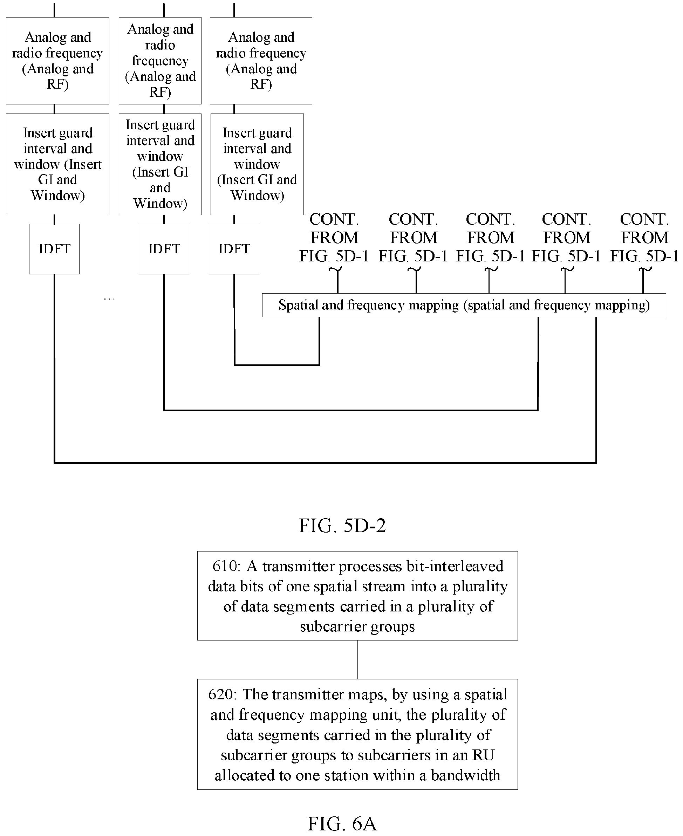

FIG. 5C is a schematic diagram of another transmission procedure of a transmitter;
FIG. 5D-1 and FIG. 5D-2 are a schematic diagram of another transmission procedure of a transmitter;
FIG. 6A is a schematic flowchart of a data segment parsing method according to an embodiment of this application;
FIG. 6B-1 and FIG. 6B-2 are a schematic diagram of another transmission procedure of a transmitter;

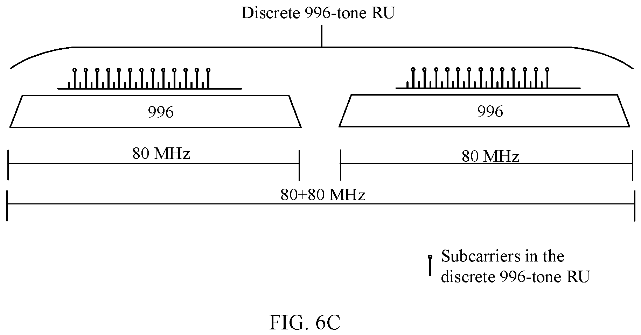

FIG. 6C is a schematic diagram of an RU allocation scenario according to an embodiment of this application;

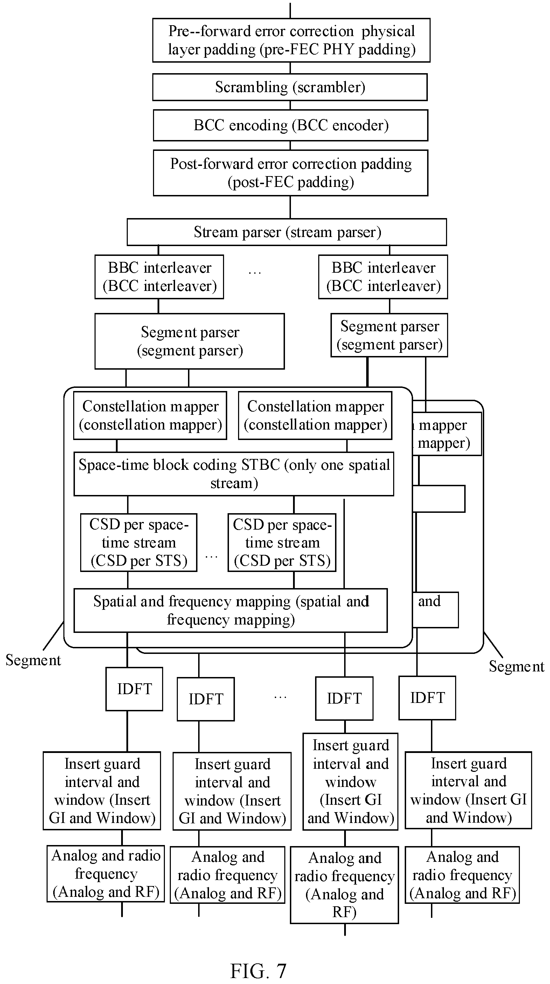

FIG. 7 is a schematic diagram of another transmission procedure of a transmitter;

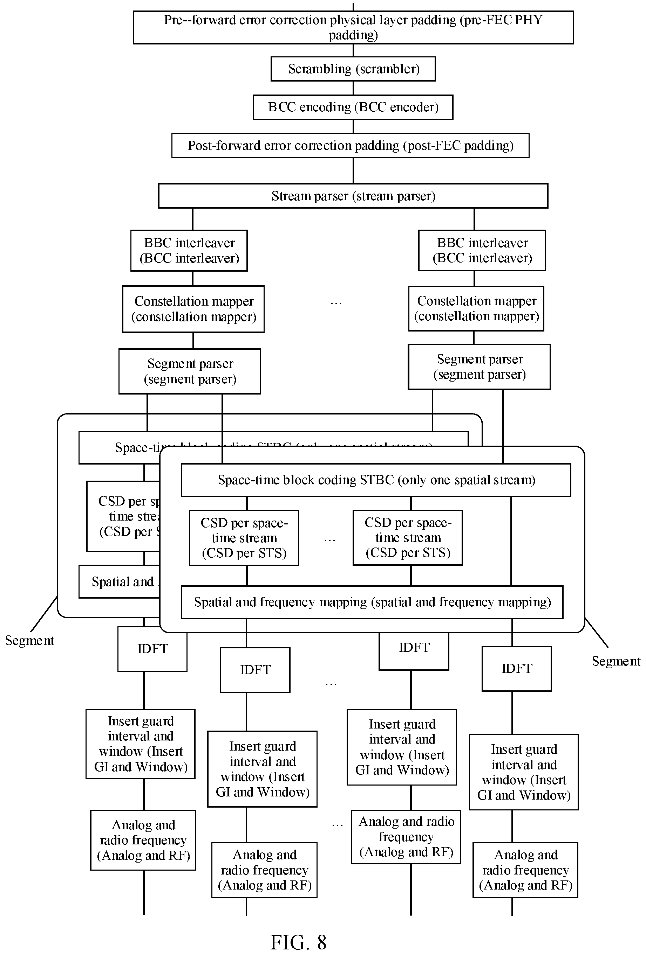

FIG. 8 is a schematic diagram of another transmission procedure of a transmitter;

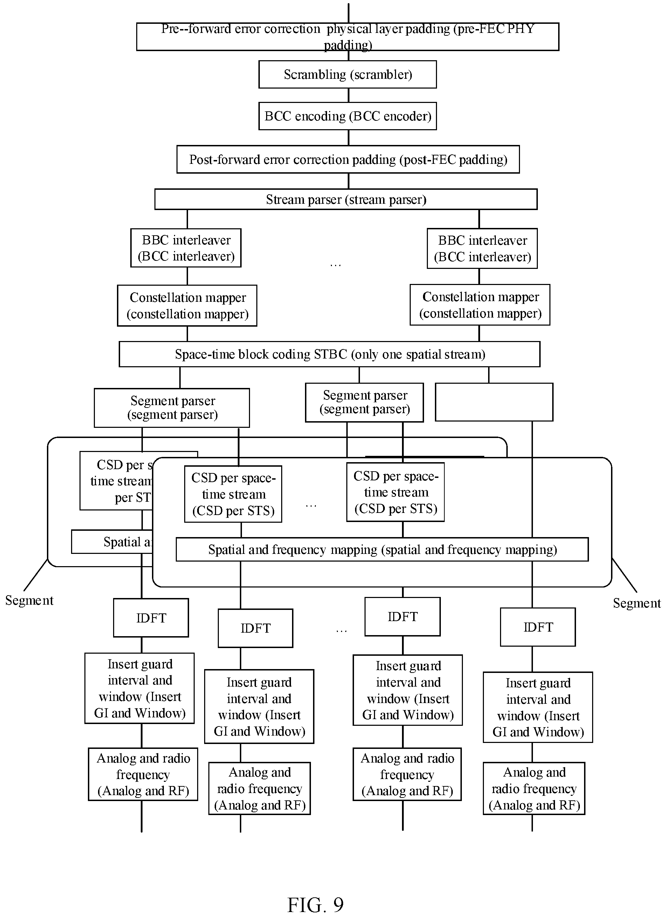

FIG. 9 is a schematic diagram of another transmission procedure of a transmitter;

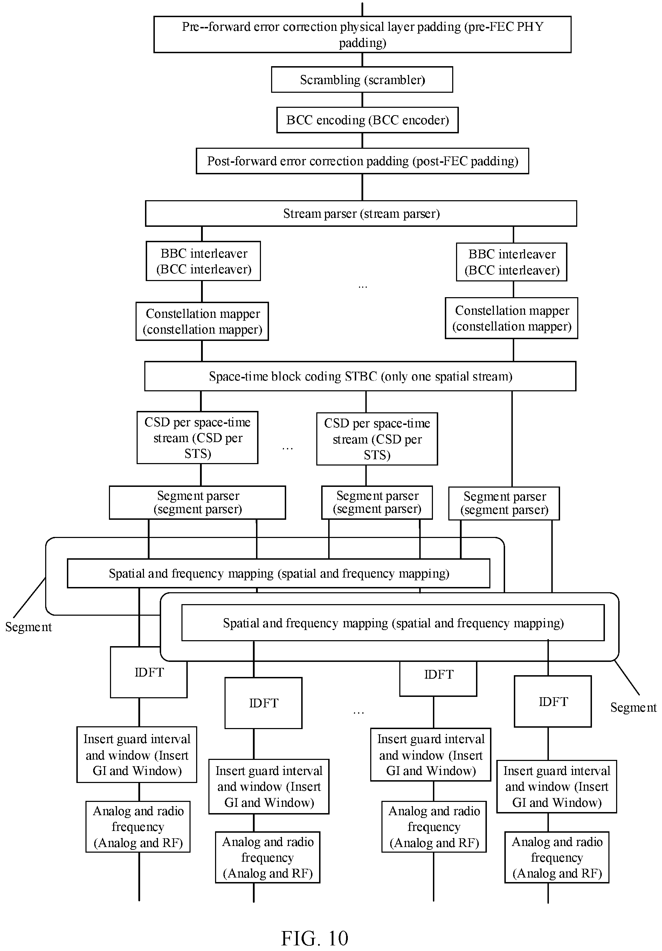

FIG. 10 is a schematic diagram of another transmission procedure of a transmitter;

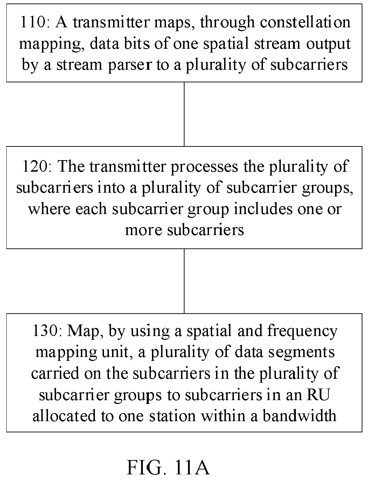

FIG. 11A is a schematic flowchart of another data segment parsing method according to an embodiment of this application;

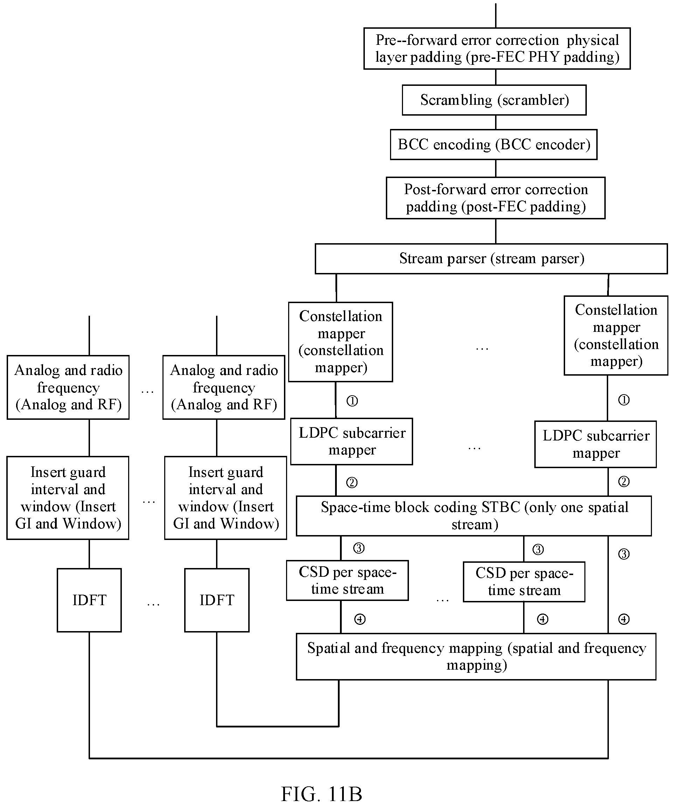

FIG. 11B is a schematic diagram of another transmission procedure of a transmitter;

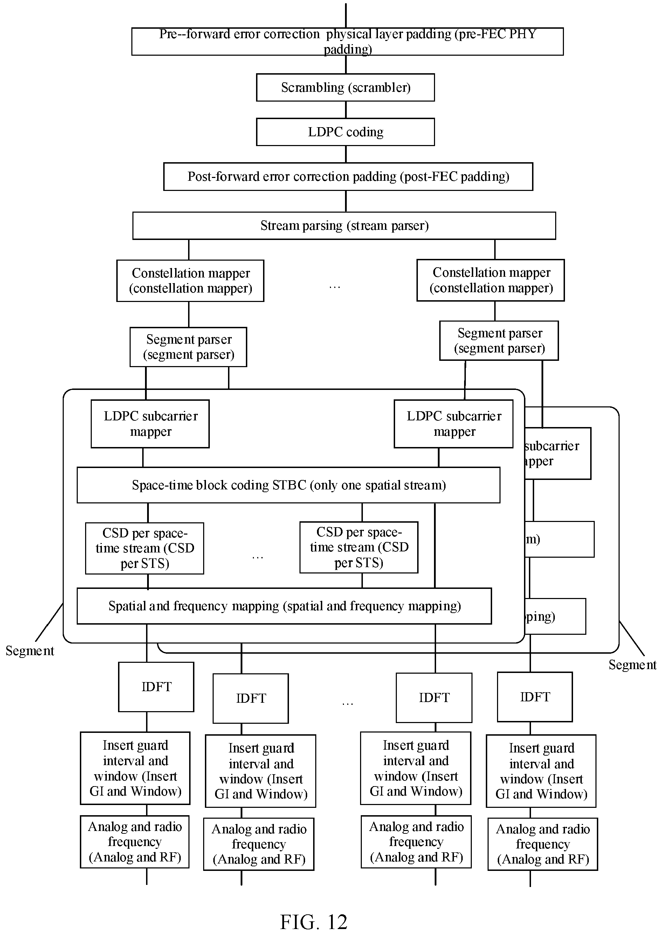

FIG. 12 is a schematic diagram of another transmission procedure of a transmitter;

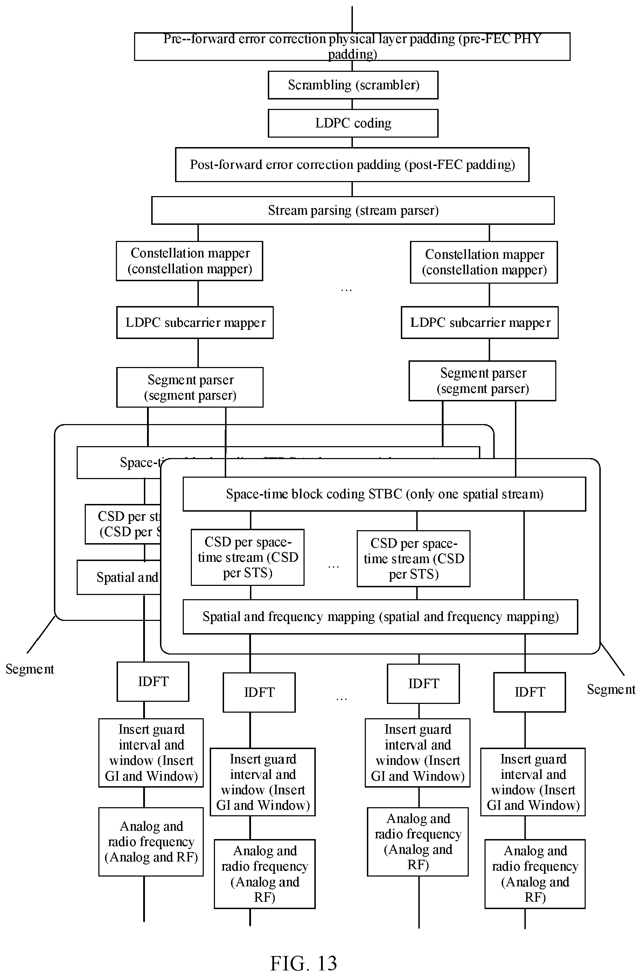

FIG. 13 is a schematic diagram of another transmission procedure of a transmitter;

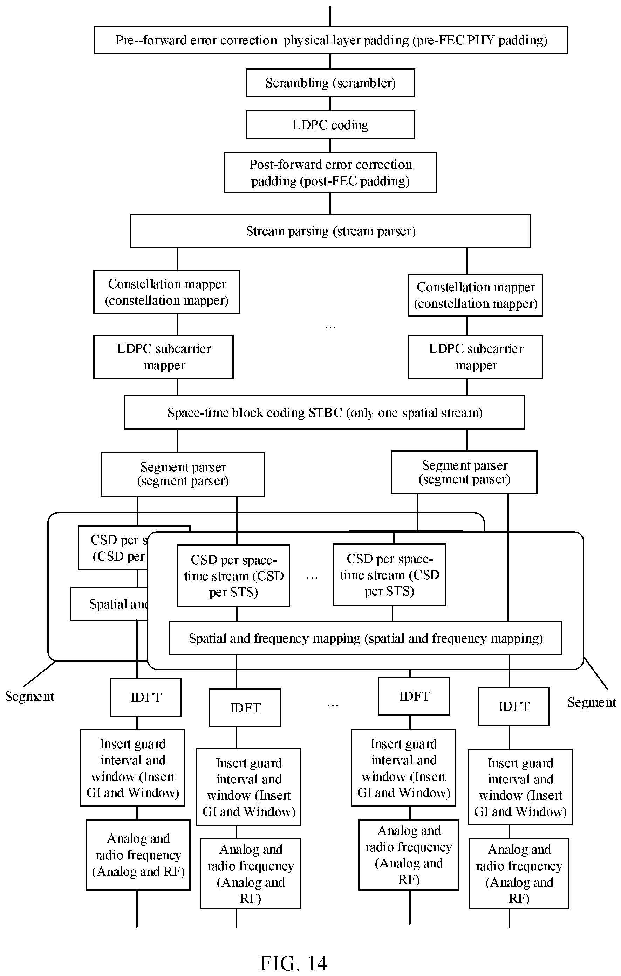

FIG. 14 is a schematic diagram of another transmission procedure of a transmitter;

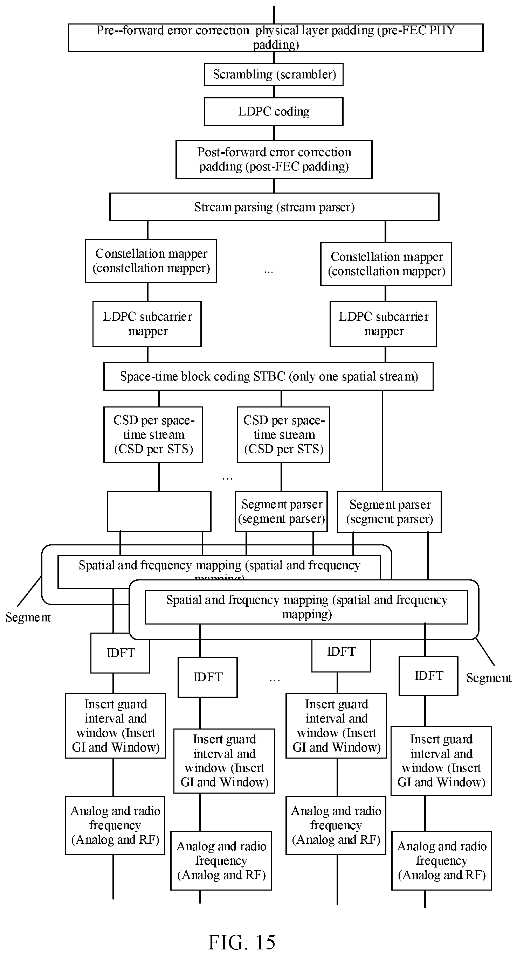

FIG. 15 is a schematic diagram of another transmission procedure of a transmitter;

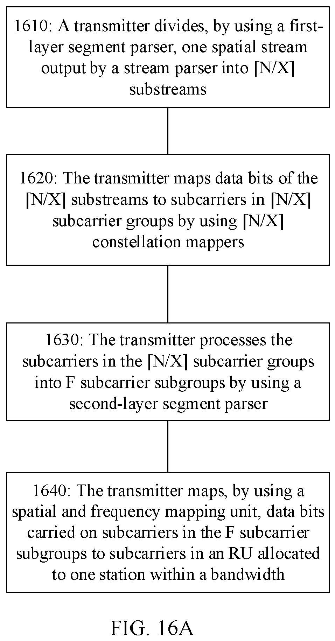

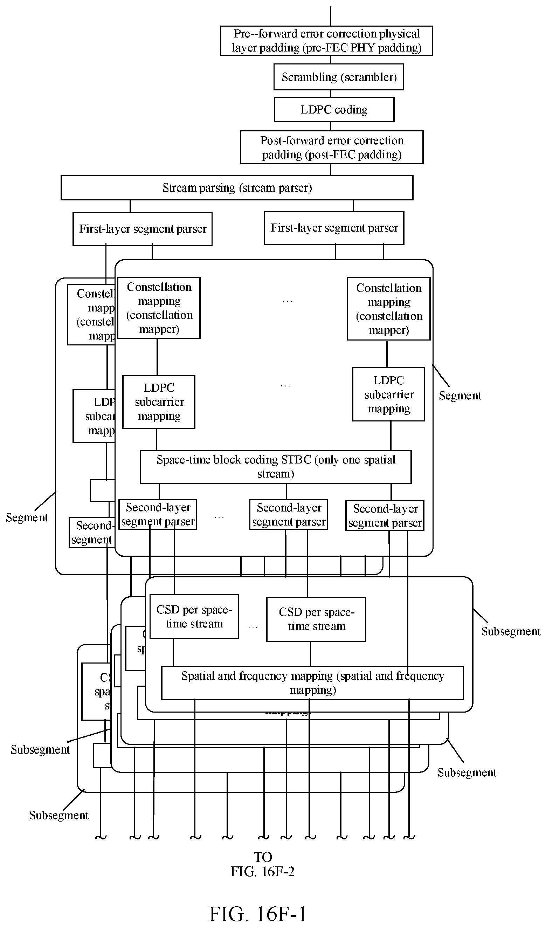

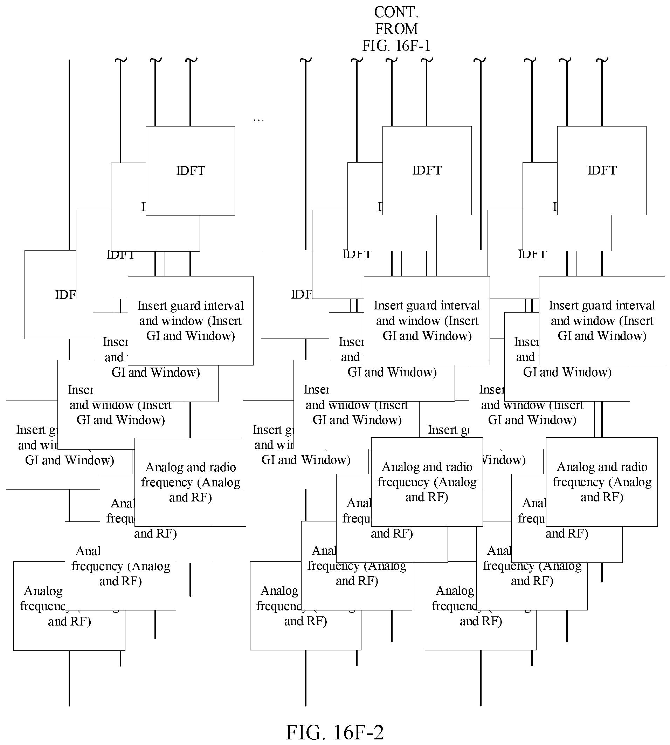

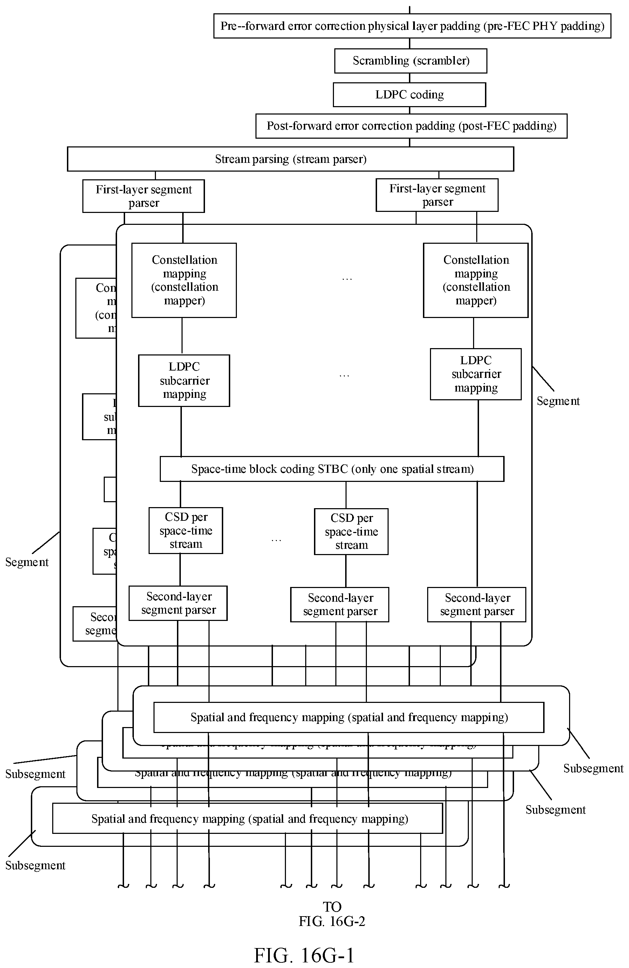

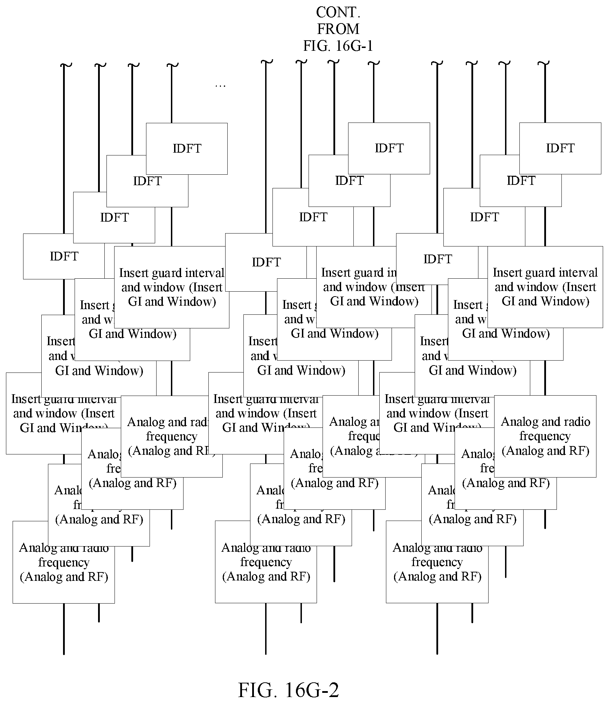

FIG. 16A is a schematic flowchart of another data segment parsing method according to an embodiment of this application;

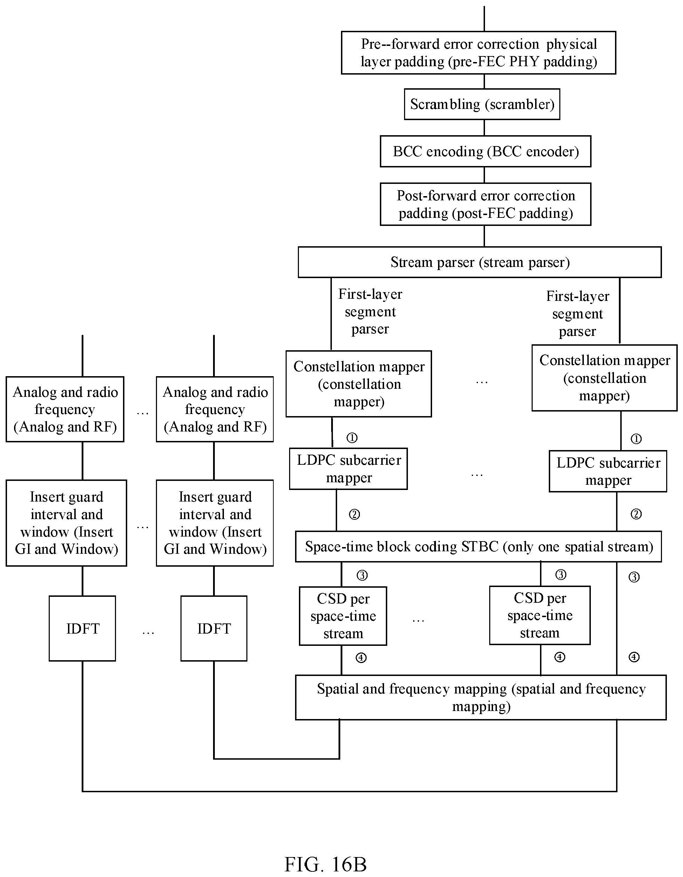

FIG. 16B is a schematic diagram of another transmission procedure of a transmitter;

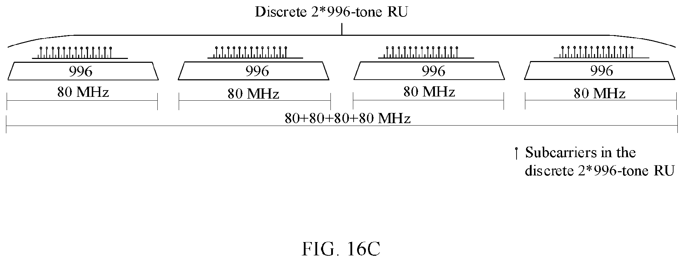

FIG. 16C is a schematic diagram of another RU allocation scenario according to an embodiment of this application;
FIG. 16D-1 and FIG. 16D-2 are a schematic diagram of another transmission procedure of a transmitter;
FIG. 16E-1 and FIG. 16E-2 are a schematic diagram of another transmission procedure of a transmitter;
FIG. 16F-1 and FIG. 16F-2 are a schematic diagram of another transmission procedure of a transmitter;
FIG. 16G-1 and FIG. 16G-2 are a schematic diagram of another transmission procedure of a transmitter;

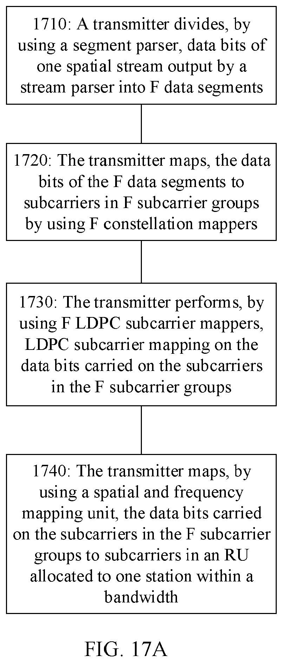

FIG. 17A is a schematic flowchart of another data segment parsing method according to an embodiment of this application;

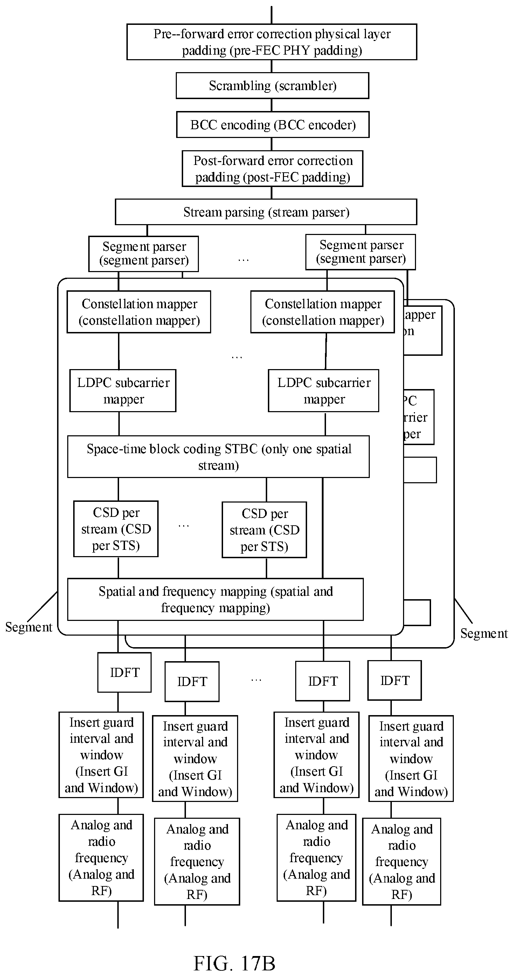

FIG. 17B is a schematic diagram of another transmission procedure of a transmitter;

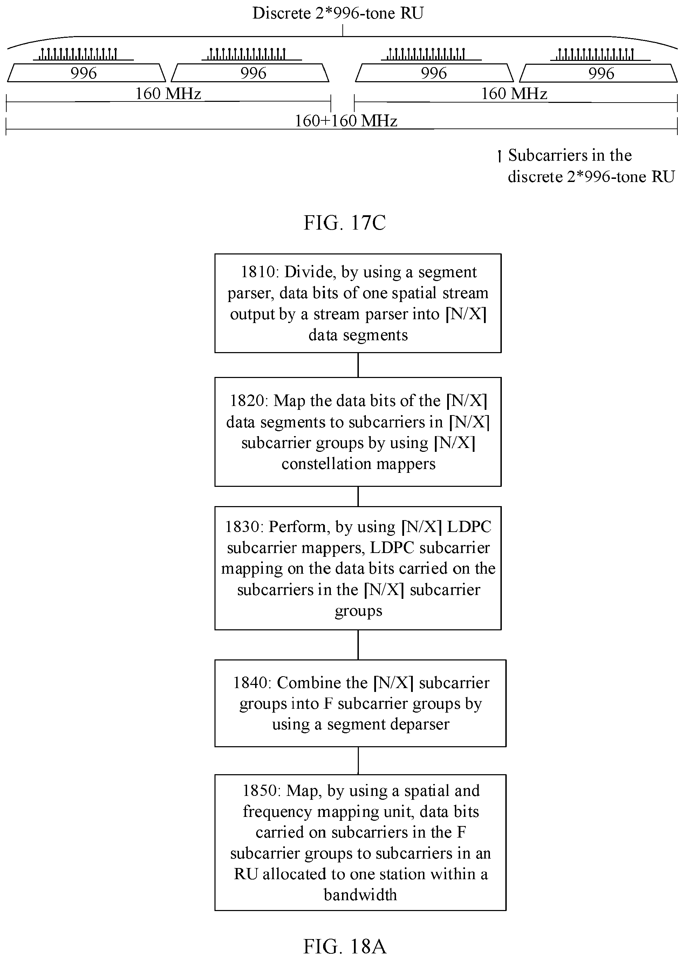

FIG. 17C is a schematic diagram of another RU allocation scenario according to an embodiment of this application;
FIG. 18A is a schematic flowchart of another data segment parsing method according to an embodiment of this application;

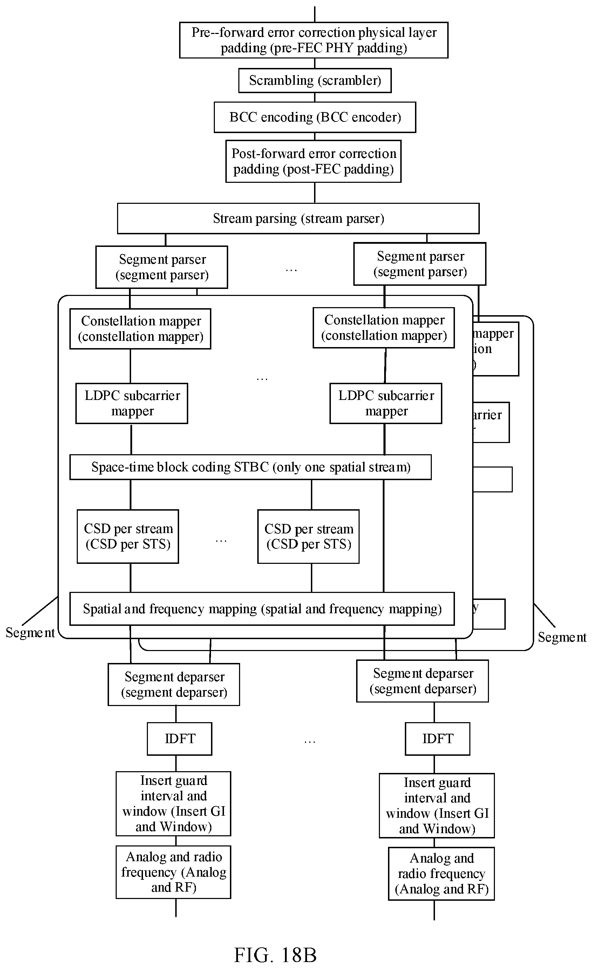

FIG. 18B is a schematic diagram of another transmission procedure of a transmitter;

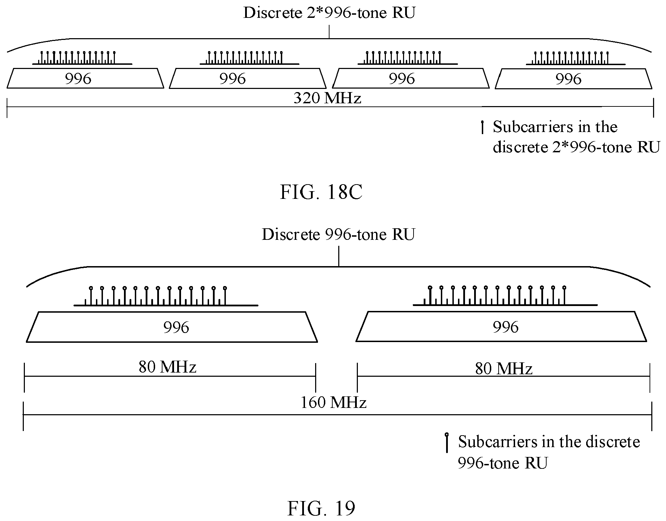

FIG. 18C is a schematic diagram of another RU allocation scenario according to an embodiment of this application;
FIG. 19 is a schematic diagram of another RU allocation scenario according to an embodiment of this application;

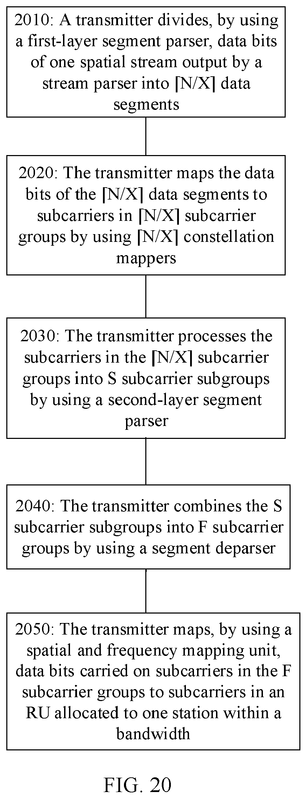

FIG. 20 is a schematic flowchart of another data segment parsing method according to an embodiment of this application;

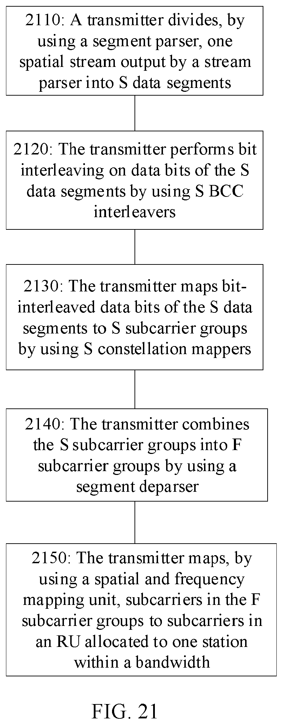

FIG. 21 is a schematic flowchart of another data segment parsing method according to an embodiment of this application;

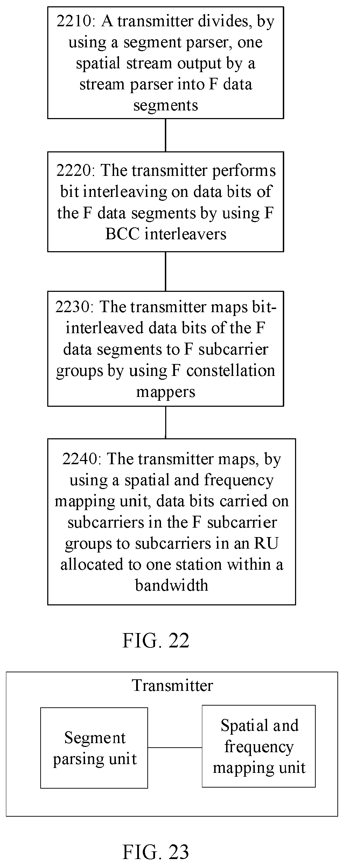

FIG. 22 is a schematic flowchart of another data segment parsing method according to an embodiment of this application;
FIG. 23 is a schematic diagram of a structure of a transmitter according to an embodiment of this application; and

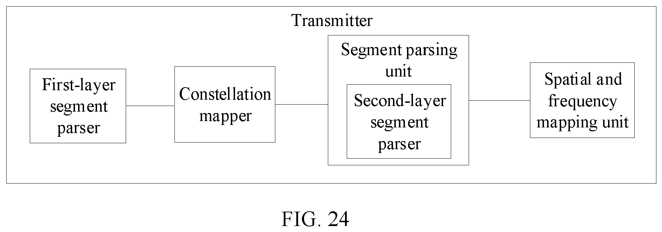

FIG. 24 is a schematic diagram of a structure of another transmitter according to an embodiment of this application.

### DESCRIPTION OF EMBODIMENTS

The following describes technical implementations in this application with reference to the accompanying drawings.

Embodiments of this application provide a resource scheduling method used in a wireless communication system. The wireless communication system may be a wireless local area network (Wireless local area network, WLAN) or a cellular network, and the method may be implemented by a communication device in the wireless communication system or a chip or a processor in the communication device. In the wireless local area network, the communication device supports communication performed according to the IEEE 802.11 protocol series, where the IEEE 802.11 series protocol includes: 802.11be, 802.11ax, or 802.11a/b/g/n/ac.

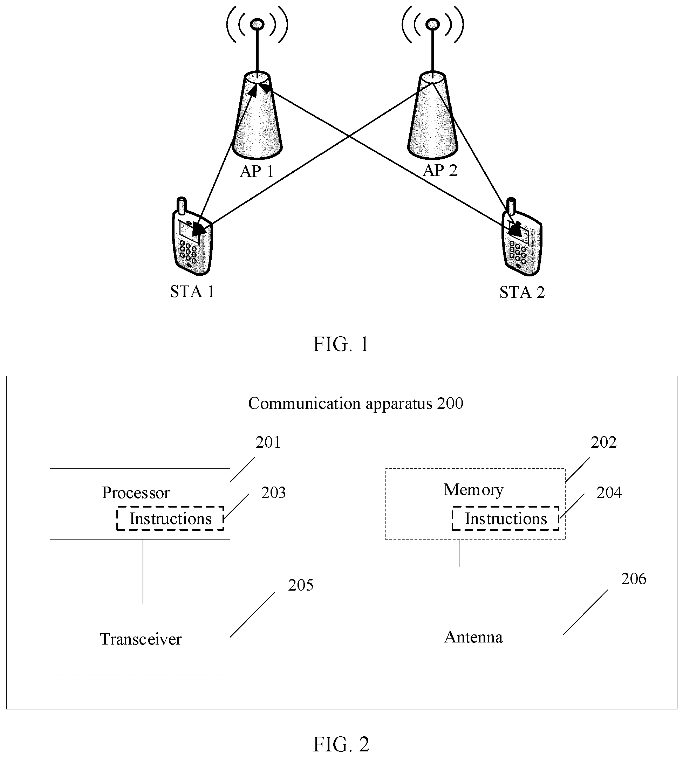

A network structure to which segment parsing in this application is applicable is illustrated by using FIG. 1 as an example. FIG. 1 is a schematic diagram of a network structure according to an embodiment of this application. The network structure may be a wireless local area network, and the network structure may include one or more access point (access point, AP) stations and one or more non-access point stations (non-access point station, non-AP STA). For ease of description, an access point station is referred to as an access point (AP), and a non-access point station is referred to as a station (STA) in this specification. APs are, for example, an AP 1 and an AP 2 in FIG. 1, and STAs are, for example, a STA 1 and a STA 2 in FIG. 1.

The access point may be an access point used by a terminal device (such as a mobile phone) to access a wired (or wireless) network, and is mainly deployed at home, in a building, and in a park. A typical coverage radius is tens of meters to 100-odd meters. Certainly, the access point may alternatively be deployed outdoors. The access point is equivalent to a bridge that connects the wired network and the wireless network. A main function of the access point is to connect various wireless network clients together and then connect the wireless network to the Ethernet. Specifically, the access point may be a terminal device (such as a mobile phone) or a network device (such as a router) with a wireless fidelity (wireless fidelity, Wi-Fi) chip. The access point may be a device that supports the 802.11be standard. Alternatively, the access point may be a device that supports a plurality of wireless local area network (wireless local area network, WLAN) standards of the 802.11 family such as the 802.11be standard, the 802.11ax standard, the 802.11ac standard, the 802.11n standard, the 802.11g standard, the 802.11b standard, and the 802.11a standard. The access point in this application may be an extremely high throughput (extremely high throughput, EHT) AP, or may be an access point applicable to a future generation of Wi-Fi standard.

The access point may include a processor, a transmitter, and a receiver. The processor is configured to control and manage an action of the access point. The transmitter is configured to send information. The receiver is configured to receive information.

The station may be a wireless communication chip, a wireless sensor, a wireless communication terminal, or the like, and may also be referred to as user equipment. For example, the station may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, a computer supporting a Wi-Fi communication function, or the like. Optionally, the station may support the 802.11be standard. The station may also support a plurality of wireless local area network (wireless local area network, WLAN) standards of the 802.11 family such as the 802.11be standard, the 802.11ax standard, the 802.11ac standard, the 802.11n standard, the 802.11g standard, the 802.11b standard, and the 802.11a standard.

The station may include a processor, a transmitter, and a receiver. The processor is configured to control and manage an action of the access point. The transmitter is configured to send information. The receiver is configured to receive information.

The access point in this application may be an extremely high throughput (extremely high throughput, EHT) STA, or may be a STA applicable to a future generation of Wi-Fi standard.

For example, the access point and the station may be devices used in the internet of vehicles, internet of things nodes, sensors, or the like in the internet of things (internet of things, IoT), smart cameras, smart remote controls, smart water or electricity meters, or the like in smart home, sensors in smart city, and the like.

The access point and the station in embodiments of this application may also be collectively referred to as communication apparatuses. The communication apparatus may include a hardware structure and a software module, and the foregoing functions are implemented in a form of a hardware structure, a software module, or a combination of the hardware structure and the software module. A function in the foregoing functions may be performed in a form of a hardware structure, a software module, or a combination of the hardware structure and the software module.

FIG. 2 is a schematic diagram of a structure of a communication apparatus according to an embodiment of this application. As shown in FIG. 2, the communication apparatus 200 may include a processor 201 and a transceiver 205, and optionally further includes a memory 202. The communication apparatus may be configured to send resource scheduling information, or may be configured to receive resource scheduling information.

The transceiver 205 may be referred to as a transceiver unit, a transceiver circuit, or the like, and is configured to implement a transceiver function. The transceiver 205 may include a receiver and a transmitter. The receiver may be referred to as a receiver circuit, or the like, and is configured to implement a receiving function. The transmitter may be referred to as a transmitter, a transmitter circuit, or the like, and is configured to implement a sending function.

The memory 202 may store a computer program, software code, or instructions 204, where the computer program, the software code, or the instructions 204 may also be referred to as firmware. The processor 201 may control a MAC layer and a PHY layer by running a computer program, software code, or instructions 203 in the processor 201, or by invoking the computer program, the software code, or the instructions 204 stored in the memory 202, to implement a resource scheduling method provided in the following embodiments of this application. The processor 201 may be a central processing unit (central processing unit, CPU), and the memory 202 may be, for example, a read-only memory (read-only memory, ROM), or a random access memory (random access memory, RAM).

The processor 201 and the transceiver 205 described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The communication apparatus 200 may further include an antenna 206. The modules included in the communication apparatus 200 are merely examples for description, and are not limited in this application.

As described above, the communication apparatus 200 described in the foregoing embodiment may be an access point or a station. However, the scope of the communication apparatus described in this application is not limited thereto, and the communication apparatus may not be limited to the structure shown in FIG. 2. The communication apparatus may be an independent device or may be a part of a large device. For example, the communication apparatus may be implemented in the following form:
(1) an independent integrated circuit IC, a chip, a chip system, or a subsystem; (2) a set including one or more ICs, where optionally, the set of ICs may also include a storage component for storing data and instructions; (3) a module that can be built in other devices; (4) a receiver, an intelligent terminal, a wireless device, a handheld device, a mobile unit, a vehicle-mounted device, a cloud device, an artificial intelligence device, or the like; or (5) others.

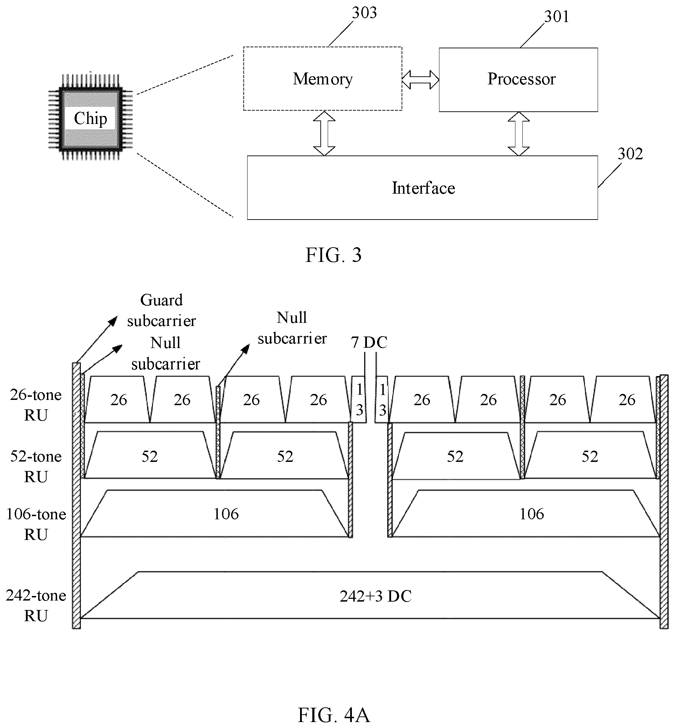

For the communication apparatus implemented in the form of a chip or a chip system, refer to a schematic diagram of a structure of a chip shown in FIG. 3. The chip shown in FIG. 3 includes a processor 301 and an interface 302. There may be one or more processors 301, and there may be a plurality of interfaces 302. The interface 302 is configured to send or receive a signal. Optionally, the chip or the chip system may include a memory 303. The memory 303 is configured to store program instructions and data that are necessary for the chip or the chip system.

Embodiments of this application do not limit the protection scope and applicability of the claims. A person skilled in the art may adaptively change functions and deployments of elements in this application, or omit, replace, or add various processes or components as appropriate without departing from the scope of embodiments of this application.

Orthogonal frequency division multiple access (orthogonal frequency division multiple access, OFDMA) may be used between the AP and the STA. In an OFDMA transmission scenario, the WLAN protocol divides a spectrum bandwidth into several resource units (resource units, RUs). A data field of a physical protocol data unit (physical protocol data unit, PPDU) may be transmitted between the AP and the STA by using an allocated RU. According to the 802.11ax standard, for a bandwidth of 20 MHz, 40 MHz, 80 MHz, or 160 MHz, the bandwidth may be divided into a plurality of types of RUs with various sizes: a 26-tone RU, a 52-tone RU, a 106-tone RU, a 242-tone RU, a 484-tone RU, a 996-tone RU, and the like, where tone represents a subcarrier. For example, a 26-tone RU represents an RU including 26 consecutive subcarriers, or represents an RU including a set of 13 consecutive subcarriers and another set of 13 consecutive subcarriers.

The resource allocation manner in which a bandwidth is divided into several resource units is still used in the 802.11be standard. In the 802.11be standard, locations of some data subcarriers and pilot subcarriers are changed based on the 802.11ax standard. For cases of 20MHz, 40MHz, 80MHz, 160MHz, and 320 MHz, the spectrum bandwidth may be divided into a plurality of types of RUs of various sizes: a 26-tone RU, a 52-tone RU, a 106-tone RU, a 242-tone RU, a 484-tone RU, a 996-tone RU, and the like. The 26-tone RU may be allocated to one user equipment for use. Generally, one RU greater than or equal to 242-tone may be allocated to one or more user equipments for use. The user equipment in this application may be understood as a STA. An RU on a bandwidth includes a data (Data) subcarrier and a pilot (Pilot) subcarrier. The data subcarrier is used to carry data information from an upper layer. The pilot subcarrier transmits a fixed value, which is used by a receive end to estimate a phase and correct the phase.

In a case of a 20 MHz bandwidth, refer to FIG. 4A. FIG. 4A is a schematic diagram of a possible resource unit allocation manner in the case of the 20 MHz bandwidth. The entire 20 MHz bandwidth may include an entire 242-tone RU, or may include various combinations of 26-tone RUs, 52-tone RUs, or 106-tone RUs. In addition to the contiguous RU for data transmission, the bandwidth also includes some guard (Guard) subcarriers, null subcarriers, or direct current (direct current, DC) subcarriers.

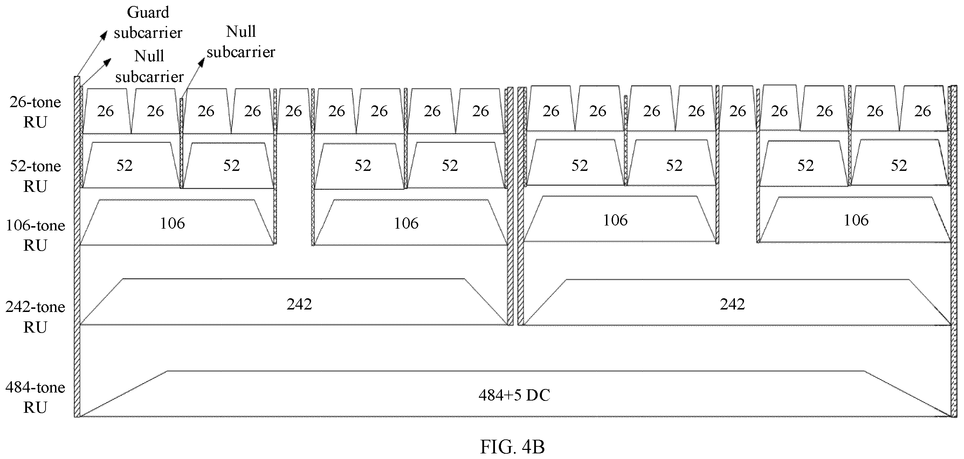

FIG. 4B is a schematic diagram of a possible resource unit allocation manner in a case of a 40 MHz bandwidth. The entire bandwidth is approximately equivalent to replication of a tone plan of the 20 MHz bandwidth. The entire 40 MHz bandwidth may include an entire 484-tone RU, or may include various combinations of 26-tone RUs, 52-tone RUs, 106-tone RUs, or 242-tone RUs.

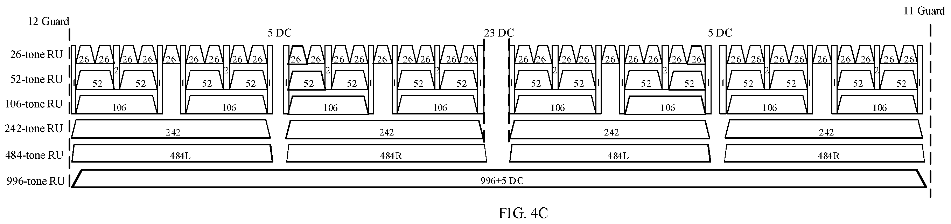

FIG. 4C is a schematic diagram of a possible resource unit allocation manner in a case of an 80 MHz bandwidth. When a channel edge is 80 MHz, the entire bandwidth is approximately equivalent to replication of a tone plan of two 40 MHz bandwidths. The entire 80 MHz bandwidth may include an entire 996-tone RU, or may include various combinations of 484-tone RUs, 242-tone RUs, 106-tone RUs, 52-tone RUs, or 26-tone RUs.

When a bandwidth is 160 MHz or 80+80 MHz, the entire bandwidth may be considered as replication of a tone plan of two 80 MHz bandwidths. The entire bandwidth may include an entire 2*996-tone RU, or may include various combinations of 26-tone RUs, 52-tone RUs, 106-tone RUs, 242-tone RUs, 484-tone RUs, or 996-tone RUs. A 2*996-tone RU is an RU including subcarriers in two consecutive 996-tone RUs.

Similarly, when the bandwidth is 320 MHz, the entire bandwidth may be considered as replication of a tone plan of two 160 MHz bandwidths. The entire bandwidth may include an entire 4*996-tone RU, or may include various combinations of 26-tone RUs, 52-tone RUs, 106-tone RUs, 242-tone RUs, 484-tone RUs, or 996-tone RUs.

The 26-tone RU, 52-tone RU, 106-tone RU, 242-tone RU, and 484-tone RU are RUs including a plurality of consecutive subcarriers, or RUs including two sets of consecutive subcarrier groups. Such RUs may be understood as contiguous RUs.

The contiguous RU in this application is an RU including a plurality of consecutive subcarriers, or an RU including two sets of consecutive subcarrier groups. A plurality of subcarriers included in each of the sets of consecutive subcarrier groups are consecutive. The two sets of consecutive subcarrier groups are only spaced apart by a guard (Guard) subcarrier, a null subcarrier, or a direct current (direct current, DC) subcarrier. All RUs supported in 802.11ax may be understood as contiguous RUs. The contiguous RU may also be referred to as a common RU (common RU, CRU). Certainly, in another embodiment, the contiguous RU may have another name. The name of the contiguous RU is not limited in this application.

It should be understood that the contiguous RU may include a plurality of consecutive subcarriers, or the contiguous RU may include two sets of consecutive subcarrier groups, and the two sets of consecutive subcarrier groups are noncontiguous. For example, a 26-tone RU including a group of 13 consecutive subcarriers and another group of 13 consecutive subcarriers is a contiguous RU. A 242-tone RU including a group of 121 consecutive subcarriers and another group of 121 consecutive subcarriers is a contiguous RU. A 484-tone RU including a group of 242 consecutive subcarriers and another group of 242 consecutive subcarriers is a contiguous RU. Similarly, a 996-tone RU including a group of 484 consecutive subcarriers and another group of 484 consecutive subcarriers is a contiguous RU. Such RU may also be referred to as a special contiguous RU or a contiguous RU in a broad sense.

FIG. 5A-1 and FIG. 5A-2 is a schematic diagram of a transmission procedure of a transmitter. For a high efficiency single user physical layer protocol data unit (high efficiency single user physical protocol data unit, HE SU PPDU), a high efficiency extended range single user physical layer protocol data unit (high efficiency extended range single user physical protocol data unit, HE ER SU PPDU), and a high efficiency trigger-based physical layer protocol data unit (high efficiency trigger-based physical protocol data unit, HE TB PPDU) of 11ax, a data field sending manner when BCC (binary convolutional code, BCC) coding is used is as follows:
1. Construct a service field, and append a sub-layer service data unit (PLCP Service Data Unit, PLCP) to the service field.
2. Pre-forward error correction (Pre-FEC padding): Append pre-forward error correction pad bits and tail bits to the field output in step 1.
3. Scrambling (Scrambler): Scramble pre-forward error correction padded data.
4. BCC coding: Perform BCC coding on scrambled data.
5. Post-forward error correction padding (Post-FEC padding): Append post-forward error correction pad bits and a packet extension field.
6. A stream parser rearranges data output in step 5 and outputs one or more spatial streams.
7. A BCC interleaver performs bit interleaving.
8. A constellation mapper modulates data, and maps data of the spatial stream to BPSK, BPSK DCM, QPSK, QPSK DCM, 16QAM, 16-QAM DCM, 64QAM, or 256QAM constellation points, where a data bit corresponding to one constellation point is carried on one subcarrier.
9. Space-time block coding (space-time block coding, STBC): Perform space-time block coding on a plurality of data subcarriers, and output a plurality of space-time streams. This step is optional, and space-time block coding is performed only when the RU transmits only one spatial stream.
10. Pilot insertion: Insert a pilot subcarrier at a proper location between the plurality of data subcarriers.
11. Cyclic shift delay (CSD): Apply CSD for each space-time stream.
12. Spatial and frequency mapping.
13. Inverse discrete Fourier transform (inverse discrete Fourier transform, IDFT): Perform inverse Fourier computation on a frequency-domain signal obtained in the foregoing step to obtain a time-domain signal.
14. Insert a guard interval (guard interval, GI) and apply windowing: Determine a length of the guard interval based on a guard interval type (GI_TYPE) indicated by a TXVECTOR parameter, and apply windowing for each transmitted OFDM symbol.
15. Analog and radio frequency: Up-convert a complex baseband signal to a specified frequency and bandwidth.

It may be understood that functional modules (or units) corresponding to the foregoing steps are deployed in the transmitter, and each functional module (or unit) is configured to perform the step corresponding to the functional module (or unit).

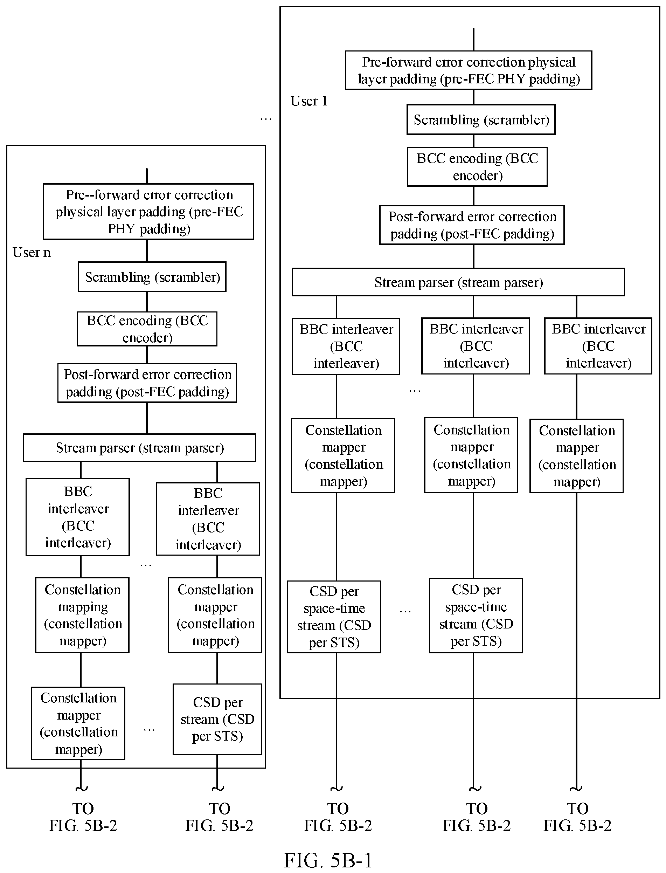

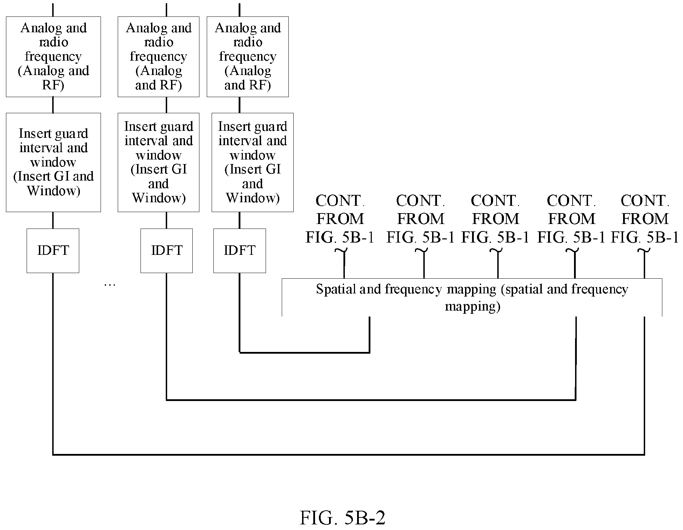

FIG. 5B is a schematic diagram of a transmission procedure of a transmitter. For a high efficiency multi-user physical layer protocol data unit (high efficiency multi-user physical protocol data unit, HE MU PPDU) of 11ax, a data field sending manner when BCC coding is used is as follows:

When sending the data field of each user equipment, the transmitter performs the following steps 1 to 11:
1. Construct a service field, and append a sub-layer service data unit (PLCP Service Data Unit, PLCP) to the service field.
2. Pre-forward error correction (Pre-FEC padding): Append pre-forward error correction pad bits and tail bits to the field output in step 1.
3. Scrambling (Scrambler): Scramble pre-forward error correction padded data.
4. BCC coding: Perform BCC coding on scrambled data.
5. Post-forward error correction padding (Post-FEC padding): Append post-forward error correction pad bits and a packet extension field.
6. A stream parser rearranges data output in step 5 and outputs one or more spatial streams.
7. A BCC interleaver performs bit interleaving.
8. A constellation mapper modulates data, and maps data of the spatial stream to BPSK, BPSK DCM, QPSK, QPSK DCM, 16QAM, 16-QAM DCM, 64QAM, or 256QAM constellation points, where a data bit corresponding to one constellation point is carried on one subcarrier.
9. Space-time block coding (space-time block coding, STBC): Perform space-time block coding on a plurality of data subcarriers, and output a plurality of space-time streams. This step is optional, and space-time block coding is performed only when the RU transmits only one spatial stream.
10. Pilot insertion: Insert a pilot subcarrier at a proper location between the plurality of data subcarriers.
11. Cyclic shift delay (CSD): The transmitter applies CSD for each space-time stream by using a CSD module applicable to HE MU PPDU.
   The transmitter performs the following steps 12 to 15 to send user fields of a plurality of user equipments together.
12. Spatial mapping: Perform spatial mapping by using a Q matrix specified in the standard.
13. Inverse discrete Fourier transform (inverse discrete Fourier transform, IDFT): Perform inverse Fourier computation on a frequency-domain signal obtained in the foregoing step to obtain a time-domain signal.
14. Insert a guard interval (guard interval, GI) and apply windowing: Determine a length of the guard interval based on a guard interval type (GI_TYPE) indicated by a TXVECTOR parameter, and apply windowing for each transmitted OFDM symbol.
15. Analog and radio frequency: Up-convert a complex baseband signal to a specified frequency and bandwidth.

It may be understood that functional modules (or units) corresponding to the foregoing steps are deployed in the transmitter, and each functional module (or unit) is configured to perform the step corresponding to the functional module (or unit).

FIG. 5C is a schematic diagram of a transmission procedure of a transmitter. For HE SU PPDU, HE ER SU PPDU, and HE TB PPDU of 11ax, a data field sending manner when LDPC coding is used is as follows:
1. Construct a service field. Append a sub-layer service data unit (PLCP Service Data Unit, PLCP) to the service field.
2. Pre-forward error correction (Pre-FEC padding): Append pre-forward error correction pad bits and tail bits to the field output in step 1.
3. Scrambling (Scrambler): Scramble pre-forward error correction padded data.
4. Low density parity check coding (low density parity check, LDPC). Perform LDPC coding on scrambled data.
5. Post-forward error correction padding (Post-FEC padding): Append post-forward error correction pad bits and a packet extension field.
6. A stream parser rearranges data output in step 5 and outputs one or more spatial streams.
7. When a quantity of subcarriers in a contiguous RU allocated to one station is greater than or equal to 996, a segment parser divides data of the spatial stream into a plurality of frequency domain segments. It may be understood that step 7 is optional.
8. A constellation mapper modulates data and maps the data of the spatial stream into a plurality of data subcarriers.
9. LDPC subcarrier mapping: Perform location mapping on the subcarriers.
10. A segment deparser combines the subcarriers. If a quantity F of frequency-domain consecutive intervals included in the bandwidth is less than a quantity of frequency domain segments into which the data of the spatial stream is divided in step 7, the segment deparser is used to combine the subcarriers, output in step 9, divided into the plurality of frequency domain segments into F subcarrier groups. The bandwidth may include a plurality of frequency domain segments, and frequency domain resources of each frequency domain segment are consecutive. For example, a consecutive 320 MHz bandwidth sequentially includes the first 80 MHz, the second 80 MHz, the third 80 MHz, and the fourth 80 MHz in ascending order of frequencies, where each 80 MHz is a frequency domain segment.
11. Space-time block coding (space-time block coding, STBC): Perform space-time block coding on a plurality of data subcarriers, and output a plurality of space-time streams. This step is optional, and space-time block coding is performed only when the RU transmits only one spatial stream.
12. Pilot insertion: Insert a pilot subcarrier at a proper location between the plurality of data subcarriers.
13. Cyclic shift delay (CSD): Apply CSD for each space-time stream.
14. Spatial and frequency mapping.
15. Inverse discrete Fourier transform (inverse discrete Fourier transform, IDFT): Perform inverse Fourier computation on a frequency-domain signal obtained in the foregoing step to obtain a time-domain signal.
16. Insert a guard interval (guard interval, GI) and apply windowing: Determine a length of the guard interval based on a guard interval type (GI_TYPE) indicated by a TXVECTOR parameter, and apply windowing for each transmitted OFDM symbol.
17. Analog and radio frequency: Up-convert a complex baseband signal to a specified frequency and bandwidth.

It may be understood that functional modules (or units) corresponding to the foregoing steps are deployed in the transmitter, and each functional module (or unit) is configured to perform the step corresponding to the functional module (or unit).

FIG. 5D-1 and FIG. 5D-2 are a schematic diagram of a transmission procedure of a transmitter. For HE MU PPDU of 802.11ax, a data field sending manner when LDPC coding is used is as follows:

When sending the data field of each user equipment, the transmitter performs the following steps 1 to 13:
1. Construct a service field. Append a sub-layer service data unit (PLCP Service Data Unit, PLCP) to the service field.
2. Pre-forward error correction (Pre-FEC padding): Append pre-forward error correction pad bits and tail bits to the field output in step 1.
3. Scrambling (Scrambler): Scramble pre-forward error correction padded data.
4. Low density parity check coding (low density parity check, LDPC). Perform LDPC coding on scrambled data.
5. Post-forward error correction padding (Post-FEC padding): Append post-forward error correction pad bits and a packet extension field.
6. A stream parser rearranges data output in step 5 and outputs one or more spatial streams.
7. When a quantity of subcarriers in a contiguous RU allocated to one station is greater than or equal to 996, a segment parser divides data of the spatial stream into a plurality of frequency domain segments. It may be understood that step 7 is optional.
8. A constellation mapper modulates data and maps the data of the spatial stream into a plurality of data subcarriers.
9. LDPC subcarrier mapping: Perform location mapping on the subcarriers.
10. A segment deparser combines the subcarriers. If a quantity F of frequency-domain consecutive intervals included in the bandwidth is less than a quantity of frequency domain segments into which the data of the spatial stream is divided in step 7, the segment deparser is used to combine the subcarriers, output in step 9, divided into the plurality of frequency domain segments into F subcarrier groups.
11. Space-time block coding (space-time block coding, STBC): Perform space-time block coding on a plurality of data subcarriers, and output a plurality of space-time streams. This step is optional, and space-time block coding is performed only when the RU transmits only one spatial stream.
12. Pilot insertion: Insert a pilot subcarrier at a proper location between the plurality of data subcarriers.
13. Cyclic shift delay (CSD): Apply CSD for each space-time stream.
   The transmitter performs the following steps 12 to 15 to send user fields of a plurality of user equipments together.
14. Spatial mapping: Perform spatial mapping by using a Q matrix specified in the standard.
15. Inverse discrete Fourier transform (inverse discrete Fourier transform, IDFT): Perform inverse Fourier computation on a frequency-domain signal obtained in the foregoing step to obtain a time-domain signal.
16. Insert a guard interval (guard interval, GI) and apply windowing: Determine a length of the guard interval based on a guard interval type (GI_TYPE) indicated by a TXVECTOR parameter, and apply windowing for each transmitted OFDM symbol.
17. Analog and radio frequency: Up-convert a complex baseband signal to a specified frequency and bandwidth.

It may be understood that functional modules (or units) corresponding to the foregoing steps are deployed in the transmitter, and each functional module (or unit) is configured to perform the step corresponding to the functional module (or unit).

It can be learned that the existing resource unit allocation only supports allocation of contiguous RUs to one or more user equipments. This RU allocation manner is excessively simple, and reliability of transmitting a data field by the RU is relatively low.

This application provides a distributed RU. The distributed RU includes a plurality of discrete subcarriers in frequency domain. Some or all of the plurality of discrete subcarriers may be distributed. In other words, the plurality of discrete subcarriers may include some subcarriers that are consecutive in frequency, and include some subcarriers that are noncontiguous in frequency. Alternatively, none of the plurality of discrete subcarriers is consecutive to one another in frequency. In this way, the subcarriers in one RU cover a wider bandwidth range, helping improve reliability of transmitting a data field by the RU.

Optionally, the distributed RU includes a data subcarrier that does not belong to the distributed RU and that exists between at least two subcarriers. In other words, in the distributed RU, at least two subcarriers are spaced apart by a data subcarrier that does not belong to the distributed RU.

Optionally, the distributed RU includes K subcarriers. A quantity of 1-MHz bands occupied by the distributed RU is greater than a quantity of 1-MHz bands occupied by a contiguous RU including a quantity K of subcarriers. A minimum quantity of 1-MHz bands is 1.

The quantity of 1-MHz bands occupied by the distributed RU is a quantity of 1-MHz bands occupied by the K subcarriers in the distributed RU. The bandwidth includes a plurality of 1-MHz bands. At least one subcarrier of the distributed RU is distributed on one 1-MHz band. Even if the subcarrier of the distributed RU does not fully occupy the one 1-MHz band, the one 1-MHz band is counted in the quantity of 1-MHz bands occupied by the distributed RU.

For example, 26 subcarriers in a distributed 26-tone RU include four subcarrier groups. In ascending order of frequencies, the 1st to the 7th subcarriers are consecutive and form one subcarrier group; the 8th to the 14th subcarriers are consecutive and form one subcarrier group; the 15th to the 20th subcarriers are consecutive and form one subcarrier group; and the 21st to the 26th subcarriers are consecutive and form one subcarrier group.

In one 1-MHz band occupied by the 1st to 7th subcarriers, only the seven subcarriers are subcarriers in the distributed 26-tone RU. Specifically, even if frequencies corresponding to the 1st to 7th subcarriers are only 0.5 MHz, that is, the 1st to 7th subcarriers do not fully occupy the 1-MHz band, because the minimum quantity of 1-MHz bands is 1, a quantity of 1-MHz bands occupied by the 1st to 7th subcarriers is also one 1-MHz band.

Similarly, in one 1-MHz band occupied by the 8th to 14th subcarriers, only the seven subcarriers are subcarriers in the distributed 26-tone RU, and a quantity of 1-MHz bands occupied by the 8th to 14th subcarriers is also one 1-MHz band. In one 1-MHz band occupied by the 15th to 20th subcarriers, only the seven subcarriers are subcarriers in the distributed 26-tone RU, and a quantity of 1-MHz bands occupied by the 15th to 20th subcarriers is also one 1-MHz band. In one 1-MHz band occupied by the 21st to 26th subcarriers, only the seven subcarriers are subcarriers in the distributed 26-tone RU, and a quantity of 1-MHz bands occupied by the 21st to 26th subcarriers is also one 1-MHz band. In this way, a quantity of 1-MHz bands occupied by the distributed 26-tone RU is four 1-MHz bands.

It can be learned from the foregoing description that a tone plan of the contiguous RU is different from that of the distributed RU. For the contiguous RU, there is a fixed correspondence between a quantity of subcarriers and a quantity of 1-MHz bands occupied by the subcarriers. For example, 26 subcarriers in a consecutive 26-tone RU occupy two 1-MHz bands, 52 subcarriers in a consecutive 52-tone RU occupy four 1-MHz bands, ..., 242 subcarriers in a consecutive 242-tone RU occupy 20 1-MHz bands, a consecutive 484-tone RU occupies 40 1-MHz bands, and a consecutive 996-tone RU occupies 80 1-MHz bands. However, for the distributed RU, there is no fixed correspondence between a quantity of subcarriers in the distributed RU and a quantity of 1-MHz bands occupied by the subcarriers. For example, 996 subcarriers in a distributed 996-tone RU may be discretely distributed on a 160 MHz bandwidth, or may be discretely distributed on a 320 MHz bandwidth. In other words, a quantity of 1-MHz bands occupied by the 996 subcarriers in the distributed 996-tone RU may be 160 1-MHz bands, or may be 320 1-MHz bands. Therefore, the implementation of sending a data field by using a contiguous RU is not applicable to sending the data field by using a distributed RU, and this is not conducive to improving reliability of transmitting a data field by the RU.

This application provides a segment parsing implementation that can be used to send a data field by using a distributed RU. The segment parsing implementation in this application may be used to perform, in a process of sending a data field of a PPDU, division on data bits output by a stream parser. It should be understood that segment parsing in this application is not limited to the implementation of sending the data field by using a distributed RU, but can alternatively be implemented by sending the data field by using a contiguous RU. The distributed RU may be a distributed single-RU or a distributed multi-RU (a distributed MRU). The contiguous RU may be a consecutive single-RU or a consecutive multi-RU (a consecutive MRU). In this way, allocations and implementations of RU can be enriched, so that communication devices can transmit a data field to each other by using the distributed RU and/or contiguous RU, thereby improving reliability of data field transmission.

For ease of description and expression, meanings represented by some letters in this embodiment are provided below.

For an RU allocated to user equipment (for example, a station):
N represents a total quantity of subcarriers (including a pilot subcarrier and a data subcarrier) corresponding to the RU allocated to the user equipment. Certainly, in another embodiment, N may alternatively represent data subcarriers corresponding to the RU.
W represents a bandwidth range occupied by all subcarriers corresponding to the RU allocated to the user equipment, and the bandwidth range may be expressed in 80 MHz.
S represents a quantity of frequency domain segments related to the bandwidth range occupied by all the subcarriers corresponding to the RU allocated to the user equipment. For example, a size of one frequency domain segment is 80 MHz.
F represents a quantity of IDFT modules that all subcarriers, corresponding to a spatial stream of user equipment, on an RU allocated to the user equipment need to pass through. The quantity of IDFT modules is the same as a quantity of segments of frequency domain resources covered by the subcarriers in the RU allocated to the user equipment. In other words, F segments of frequency domain resources require F IDFT modules. Each segment of frequency domain resources include a plurality of consecutive subcarriers, and at least two segments of frequency domain resources are noncontiguous. It should be understood that, different from the foregoing frequency domain segments, two adjacent frequency domain resources are spaced apart and two adjacent frequency domain segments are not necessarily spaced apart.
X represents a quantity of subcarriers supported by each frequency domain segment (for example, 80 MHz).

The RU allocated to the user equipment may be a distributed single-RU, a distributed MRU, a consecutive single-RU, or a consecutive MRU.

Segment parsing implementations provided in this embodiment of this application include but are not limited to the following several types:
Segment parsing implementation 1 involves two levels of division. The first level of division is performed on data bits of a spatial stream after processing of the stream parser, and the second level of division is performed on data bits of one spatial stream after constellation mapping or BCC interleaving and before spatial and frequency mapping. The two levels of division involved in segment parsing implementation 1 specifically include the following implementations:
For the first-layer division, a transmitter divides, based on $\left⌈N/X\right⌉$ and by using a first-layer segment parser, data bits of a stream output by the stream parser. Specifically, if $\left⌈N/X\right⌉$ is 1, first-layer division does not need to be performed; or if the $\left⌈N/X\right⌉$ is greater than 1, the data bits of the stream are divided into $\left⌈N/X\right⌉$ data segments. The first-layer division may be implemented by using the first-layer segment parser. ┌ ┐ indicates rounding up.

For the second-layer division, if $\left⌈N/X\right⌉ < F$, the second-layer division needs to be performed, and the data bits of the stream are divided into F data segments. If $\left⌈N/X\right⌉ = F$, second-layer division is not required. If $\left⌈N/X\right⌉ > F$, reverse division needs to be performed, that is, merging the $\left⌈N/X\right⌉$ data segments obtained through the first-layer division into F data segments.

Data segment parsing implementation 2 involves two levels of division. The first level of division is performed on data bits of a spatial stream after processing of the stream parser, and the second level of division is performed on data bits of one spatial stream after constellation mapping or BCC interleaving and before spatial and frequency mapping. The two levels of division involved in segment parsing implementation 2 specifically include the following implementations:
For the first-layer division, data bits of one stream output by the stream parser are divided based on $\left⌈N/X\right⌉$. Specifically, if is 1, first-layer division does not need to be performed; or if the $\left⌈N/X\right⌉$ is greater than 1, the data bits of the stream are divided into $\left⌈N/X\right⌉$ data segments. The first-layer division may be implemented by using the first-layer segment parser.

An implementation of the second-layer division is as follows: Data bits of one stream are divided into S data segments. If S>F, after the second-layer division and before spatial and frequency mapping, the S data segments are combined into F data segments. If S=F, second-layer division does not need to be performed. The case of S<F does not exist.

Data segment parsing implementation 3 involves one level of division, and the one level of division refers to division performed on data bits of a spatial stream after processing of the stream parser. Data segment parsing implementation 3 is specifically as follows:
The data bits of one stream output by the stream parser are divided into S data segments.

If S>F, after the segment parser of the transmitter performs first-layer division and before a spatial and frequency mapping unit performs spatial and frequency mapping, the transmitter combines the S data segments into F data segments by using a segment deparser module.

If S=F, the data segments do not need to be combined by using the segment deparser.

The case of S<F does not exist.

Data segment parsing implementation 4 involves one level of division. Data segment parsing implementation 4 specifically includes the following implementation: The segment parser of the transmitter divides data bits of one spatial stream output by the stream parser into F data segments.

In this embodiment of this application, when the data field is coded through BCC coding, the transmitter includes a BCC coding unit, a constellation mapper, a segment parser, and a spatial and frequency mapping unit. Optionally, the transmitter may further include at least one of a space-time block coding unit and a CSD unit.

When the data field is coded through LDPC coding, the transmitter includes a constellation mapper, an LDPC subcarrier mapper, a segment parser, and a spatial and frequency mapping unit. Optionally, the transmitter may further include at least one of a space-time block coding unit and a CSD unit.

Segment implementations in this embodiment of this application are applicable to a scenario in which a data field is coded through BCC coding, and are also applicable to a scenario in which a data field is coded through LDPC coding.

It should be noted that, in the foregoing description, the subcarriers corresponding to the RU allocated to the user equipment may include a pilot subcarrier, and subcarrier data supported by the frequency domain segment may also include a pilot subcarrier. However, related processing or an operation on a subcarrier in a data field processing process in this embodiment of this application is short for a related operation on a data bit carried on a data subcarrier. For example, a space-time block coding operation on a subcarrier (namely, a subcarrier carrying a data bit) refers to a space-time block coding operation on a data bit carried on a data subcarrier. For another example, a CSD operation on a subcarrier refers to a CSD operation on a data bit carried on a data subcarrier. This is uniformly described herein, and details are not described again subsequently.

I. Specific implementations of data segment parsing implementation 1 are described below with reference to embodiments.

1. A scenario in which $\left⌈N/X\right⌉$ corresponding to an RU allocated to user equipment is equal to or less than 1 is used as an example for description.

In some embodiments, $\left⌈N/X\right⌉$ corresponding to an RU of a stream of user equipment is equal to or less than 1, and F>1. In this scenario, a transmitter performs second-layer division on data bits, but does not perform first-layer division.

As shown a schematic flowchart shown in FIG. 6A, when the data field is coded through BCC coding, a data segment parsing method includes the following steps:
610: The transmitter processes bit-interleaved data bits of one spatial stream into a plurality of data segments carried in a plurality of subcarrier groups, where each subcarrier group includes one or more subcarriers, and a subcarrier in each subcarrier group carries a data bit of one of the data segments.

It may be understood that, in step 610, the data bits of one spatial stream are divided after the bit interleaving.

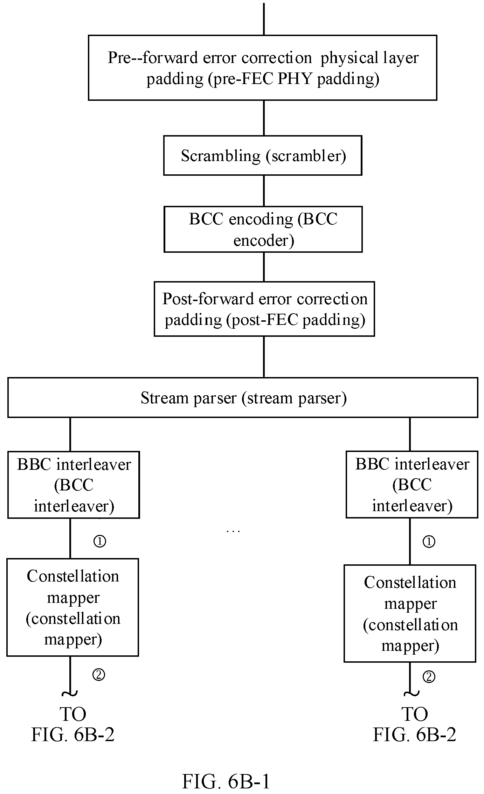

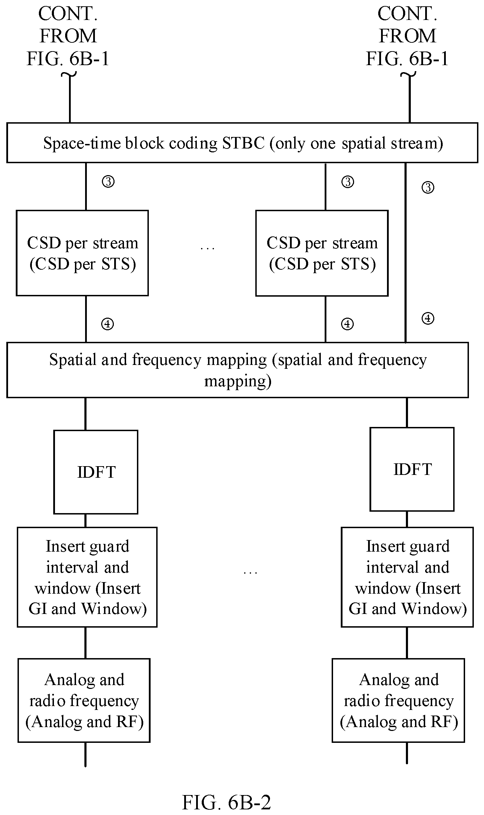

Reference may be made to FIG. 6B-1 and FIG. 6B-2, which are a schematic diagram of a transmission procedure of the transmitter. The transmitter may perform division after the bit interleaving and before constellation mapping (① in FIG. 6B-1); or the transmitter may perform division after constellation mapping and before spatial and frequency mapping (②, ③, and ④ in FIG. 6B-1 and FIG. 6B-2). More specifically, the transmitter performs division after constellation mapping and before spatial and frequency mapping, for example, division is performed after constellation mapping and before space-time block coding (② in FIG. 6B-1), or may be performed after space-time block coding and before CSD processing (③ in FIG. 6B-2), or may be performed after CSD processing and before spatial and frequency mapping (④ in FIG. 6B-2).

620: The transmitter maps, by using a spatial and frequency mapping unit, the plurality of data segments carried in the plurality of subcarrier groups to subcarriers in an RU allocated to one station within a bandwidth.

In other words, the transmitter maps, by using the spatial and frequency mapping unit, data bits carried on subcarriers in the plurality of subcarrier groups to subcarriers in the resource unit RU allocated to the one station within the bandwidth.

The spatial and frequency mapping unit may perform spatial mapping and frequency mapping, or may perform only spatial mapping. When performing only spatial mapping, the spatial and frequency mapping unit may also be referred to as a spatial mapping unit.

The RU allocated to the one station may include a distributed RU, or may include a contiguous RU, or may include a distributed RU and a contiguous RU.

It can be learned that in the technical implementation of this application, the data bits may be divided after the bit interleaving and before the spatial and frequency mapping. In other words, the data bits of the spatial stream are divided after the bit interleaving, which is equivalent to delaying a time point of dividing the data bits, and thus delays processing, by using a plurality of modules or units, data bits of subcarriers obtained based on one stream. This reduces related processing modules or units that need to be deployed in the transmitter.

The bandwidth includes a plurality of segments of frequency domain resources, each segment of frequency domain resources includes a plurality of consecutive subcarriers, and any two segments of frequency domain resources are noncontiguous. Each segment of frequency domain resources may also be understood as one frequency-domain consecutive interval.

A quantity of the plurality of subcarrier groups is a quantity of frequency-domain consecutive intervals occupied by the RU allocated to the station. In other words, the quantity of the plurality of subcarrier groups is F.

For example, in a schematic diagram of a scenario shown in FIG. 6C, a bandwidth is at a frequency of 160 MHz, the 160 MHz includes two frequency-domain consecutive intervals, and each frequency-domain consecutive interval is at a frequency of 80 MHz. The RU allocated to the user equipment is a distributed 996-tone RU. Subcarriers in the distributed 996-tone RU are discretely distributed in the two frequency-domain consecutive intervals. In this scenario, the bit-interleaved data bits of the one spatial stream may be processed as two data segments carried in two subcarrier groups. In other words, a quantity of subcarrier groups is 2.

The following specifically describes several possible implementations of the second-layer division.

FIG. 7 is a schematic diagram of a transmission procedure of the transmitter. In a possible implementation, the data bits are divided after the bit interleaving and before constellation mapping. It may be understood that the transmitter divides the data bits at the location of ① in FIG. 6B-1. Specifically, step 610 may include the following steps:
6101: The transmitter divides, by using a segment parser, the bit-interleaved data bits of the one spatial stream into a plurality of substreams, where each substream includes a data bit of one data segment.
6102: The transmitter maps data bits of the plurality of substreams to the subcarriers in the plurality of subcarrier groups by using a plurality of constellation mappers, where each subcarrier group carries a data bit of one substream, and each constellation mapper is configured to perform constellation mapping on one substream.

It may be understood that, in step 6101, the segment parser divides the data bits of the one spatial stream after the bit interleaving and before the constellation mapping.

After the one spatial stream is divided into a plurality of substreams, a plurality of functional modules or a plurality of functional units process, in parallel, the data bits carried in the plurality of substreams. In other words, after the division, the plurality of functional modules or the plurality of functional units process the plurality of data segments in parallel. Specifically, as shown in FIG. 7, the plurality of constellation mappers perform constellation mapping in parallel on data bits of substreams output by a plurality of segment parsers, and each constellation mapper performs constellation mapping on a data bit of one sub stream, to map the data bits of the plurality of substreams to a plurality of subcarrier groups. Each substream corresponds to one subcarrier group.

If the RU allocated to the user equipment transmits only one spatial stream, space-time coding may be performed before step 620. A plurality of space-time block coding units perform, in parallel, space-time block coding on the data bits carried on the subcarriers in a plurality of subcarrier groups (which is referred to as space-time block coding on the subcarriers for short below). Each space-time block coding unit is configured to perform space-time block coding on a subcarrier in one subcarrier group. Space-time block coding is an optional operation in a data field processing and sending process, and the optional step is performed before spatial and frequency mapping.

Before step 620, CSD processing may be performed on a data bit carried on a subcarrier of at least one substream in the plurality of substreams (which is referred to as CSD processing on the subcarrier for short below). Specifically, at least one CSD unit performs CSD processing on the subcarrier of at least one substream, and one CSD unit is configured to process a subcarrier of one substream.

For example, the one spatial stream in step 6101 is a spatial stream other than the first stream transmitted by the RU, and the transmitter may perform CSD processing on a subcarrier of each substream in the plurality of substreams.

For another example, the one spatial stream in step 6101 is the first stream transmitted by the RU, and two streams are output after space-time block coding is performed on subcarriers obtained after constellation mapping. The transmitter may perform CSD processing on a subcarrier of a substream corresponding to the second stream in the two streams.

FIG. 8 is a schematic diagram of a transmission procedure of the transmitter. In another possible implementation, the transmitter divides the data bits after constellation mapping and before spatial and frequency mapping. It may be understood that the transmitter divides the data bits at the location of ② in FIG. 6B-1. Specifically, step 610 may include the following steps:
6103: The transmitter maps the bit-interleaved data bits of the one spatial stream to a plurality of subcarriers by using a constellation mapper.
6104: The transmitter divides the plurality of subcarriers into the plurality of subcarrier groups by using a segment parser.

It may be understood that while the plurality of subcarriers are divided into the plurality of subcarrier groups, the data bits of the one spatial stream are also divided into a plurality of data segments, and each subcarrier group carries a data bit of one of the data segments.

Division is performed after the constellation mapper maps the data bits of the one spatial stream to the plurality of subcarriers. In this way, a time point of division can be further delayed, and a quantity of modules that need to be deployed in the data field processing and sending process can be further reduced.

If the RU allocated to the user equipment transmits only one spatial stream, space-time coding may be performed before step 620. A plurality of space-time block coding units perform space-time block coding on the subcarriers in the plurality of subcarrier groups in parallel. Each space-time block coding unit is configured to perform space-time block coding on a subcarrier in one subcarrier group. Space-time block coding is an optional step in the data field processing and sending process, and the optional step is performed before spatial and frequency mapping.

Before step 620, CSD processing may be performed on a subcarrier of at least one substream in the plurality of substreams. Specifically, at least one CSD unit performs CSD processing on the subcarrier of at least one substream, and one CSD unit is configured to process a subcarrier of one substream.

For example, the one spatial stream in step 6101 is a spatial stream other than the first stream transmitted by the RU, and the transmitter may perform CSD processing on a subcarrier of each substream in the plurality of substreams.

For another example, the one spatial stream in step 6101 is the first stream transmitted by the RU, and two space-time streams are output after space-time block coding is performed on subcarriers obtained after constellation mapping. The transmitter may perform CSD processing on a subcarrier of a substream corresponding to the second space-time stream in the two space-time streams.

FIG. 9 is a schematic diagram of a transmission procedure of the transmitter. In still another possible implementation, the RU allocated to the user equipment transmits only one spatial stream. The transmitter may divide the data bits after space-time block coding and before frequency mapping. It may be understood that the transmitter divides the data bits at the location of ③ in FIG. 6B-2. Specifically, step 610 may include the following steps:
6103: The transmitter maps the bit-interleaved data bits of the one spatial stream to a plurality of subcarriers by using a constellation mapper.
6105: The transmitter performs, by using an STBC unit, space-time block coding on the plurality of subcarriers, to obtain a plurality of space-time block coded subcarriers.
6106: The transmitter divides the plurality of space-time block coded subcarriers into the plurality of subcarrier groups by using a segment parser.

In this way, division is performed after the space-time block coding, so that there is no need to deploy a plurality of space-time block coding units in the transmitter, and a quantity of functional modules that need to be deployed in the data field processing and sending process can be effectively reduced.

Two space-time streams are obtained after the space-time block coding. The segment parser divides subcarriers corresponding to each space-time stream into a plurality of subcarrier groups. Each subcarrier group corresponds to one segment. Before step 620, the transmitter may perform, by using a plurality of CSD units, CSD processing on subcarriers in a plurality of subcarrier groups corresponding to the second space-time stream. Each CSD unit is configured to perform CSD processing on a subcarrier in one subcarrier group.

FIG. 10 is a schematic diagram of a transmission procedure of the transmitter. In yet another possible implementation, the transmitter may perform division after the CSD processing and before frequency mapping. It may be understood that the transmitter performs division at the location of ④ in FIG. 6B-2. Specifically, step 610 may include the following steps:
6103: The transmitter maps the bit-interleaved data bits of the one spatial stream to a plurality of subcarriers by using a constellation mapper.
6107: The transmitter performs CSD processing on at least one subcarrier in the plurality of subcarriers.
6108: The transmitter divides the plurality of subcarriers into the plurality of subcarrier groups by using a segment parser.

It may be understood that when dividing the plurality of subcarriers into the plurality of subcarrier groups, the segment parser also divides the data bits of the one spatial stream into a plurality of data segments, and subcarriers in each subcarrier group carry one of the data segments.

The plurality of subcarriers in step 6103 are subcarriers obtained by performing constellation mapping on data bits of a spatial stream other than the first stream, or the plurality of subcarriers are a plurality of subcarriers obtained after constellation mapping is performed on data bits of the first stream and space-time block coding is further performed.

When a quantity of spatial streams allocated to user equipment is greater than or equal to 2, the transmitter performs CSD processing on a subcarrier of a stream other than the first stream. For example, the transmitter performs CSD processing on subcarriers in the second stream, the third stream, ..., and the n^{th} stream. In other words, in step 6103, if a bit-interleaved spatial stream is a stream other than the first stream, the transmitter performs CSD processing on each subcarrier in the plurality of subcarriers.

If the one spatial stream in step 6103 is the first stream, and two space-time streams are output after the space-time block coding, CSD processing is performed on a plurality of subcarriers corresponding to the second space-time stream in the two space-time streams.

In this way, a time point of division can be further delayed.

In a schematic flowchart shown in FIG. 11A, in a case in which $\left⌈N/X\right⌉$ of an RU of a stream of the foregoing user equipment is equal to or less than 1 and F>1, when a data field is coded through LDPC coding, the data segment parsing method includes the following steps:
110: The transmitter maps, through constellation mapping, data bits of one spatial stream output by the stream parser to a plurality of subcarriers.

Specifically, the transmitter may modulate the data bits of the one spatial stream by using a constellation mapper, to map data of one spatial stream to BPSK, BPSK DCM, QPSK, QPSK DCM, 16QAM, 16-QAM DCM, 64QAM, or 256QAM constellation points, where data bits corresponding to the constellation points are carried on the plurality of subcarriers.

120: The transmitter processes the plurality of subcarriers into a plurality of subcarrier groups, where each subcarrier group includes one or more subcarriers.

In step 110, after the constellation mapper of the transmitter maps, through the constellation mapping, the data bits of the one spatial stream to the plurality of subcarriers, the segment parser of the transmitter divides the plurality of subcarriers, obtained by mapping of the spatial stream, into the plurality of subcarrier groups.

The segment parser may be understood as a second-layer segment parser in data segment parsing implementation 1. In a case in which $\left⌈N/X\right⌉ \leq 1$, when the spatial stream is processed by using data segment parsing implementation 1, first-layer division may not be required, that is, the first-layer segment parser does not need to be used.

It may be understood that the plurality of subcarriers carry the data bits of the one spatial stream. After the plurality of subcarriers are divided into the plurality of subcarrier groups, data bits carried on the subcarrier in each subcarrier group may be understood as a data segment. In other words, when the plurality of subcarriers are divided into the plurality of subcarrier groups, the data bits of the one spatial stream are also divided into a plurality of data segments, and one subcarrier group carries a data bit of one data segment.

FIG. 11B is a schematic diagram of a transmission procedure of the transmitter. The transmitter may perform division after constellation mapping and before LDPC subcarrier mapping (as shown in ① in FIG. 11B); or the transmitter may perform division after LDPC subcarrier mapping and before spatial and frequency mapping (as shown in ②, ③, and ④ in FIG. 11B). More specifically, the transmitter performs division after LDPC subcarrier mapping and before spatial and frequency mapping, for example, division is performed after LDPC subcarrier mapping and before space-time block coding (② in FIG. 11B), or may be performed after space-time block coding and before CSD processing (③ in FIG. 11B), or may be performed after CSD processing and before spatial and frequency mapping (④ in FIG. 11B).

130: Map, by using a spatial and frequency mapping unit, the plurality of data segments carried in the plurality of subcarrier groups to subcarriers in a resource unit RU allocated to one station within a bandwidth.

The spatial and frequency mapping unit may perform spatial mapping and frequency mapping, or may perform only spatial mapping. When performing only spatial mapping, the spatial and frequency mapping unit may also be referred to as a frequency mapping unit.

In this way, when the data field is coded through LDPC coding, the data bits may be divided after constellation mapping and before spatial and frequency mapping. In other words, the data bits of the spatial stream are divided after the constellation mapping, which is equivalent to delaying a time node of division, and thus delays processing, by using a plurality of modules or units, subcarriers obtained based on one stream. This reduces related processing modules or units that need to be deployed.

For related description and an example of a quantity of the plurality of subcarrier groups, refer to the related descriptions of the quantity of the plurality of subcarrier groups in the embodiment corresponding to FIG. 6A. Details are not described herein again.

The following specifically describes several possible implementations of the second-layer division.

FIG. 12 is a schematic diagram of a transmission procedure of the transmitter. In a possible implementation, the transmitter divides the data bits after constellation mapping and before LDPC subcarrier mapping. It may be understood that the transmitter divides the data bits at the location of ① in FIG. 11B. Specifically, step 120 may include the following steps:
1201: The transmitter divides the plurality of subcarriers into the plurality of subcarrier groups by using the segment parser.

It may be understood that, in step 1201, the segment parser divides, after constellation mapping and before LDPC subcarrier mapping, the plurality of subcarriers carrying the data bits of the one spatial stream into the plurality of subcarrier groups, and at the same time, also divides the data bits of the one spatial stream into a plurality of data segments. Each of the plurality of subcarrier groups carries a data bit of one data segment.

1202: The transmitter performs, by using a plurality of LDPC subcarrier mappers, LDPC subcarrier mapping on the data bits carried in the plurality of subcarrier groups, where each LDPC subcarrier mapper is configured to map data bits carried in one subcarrier group.

After the plurality of subcarriers are divided into the plurality of subcarrier groups, a plurality of functional modules or a plurality of units process, in parallel, the data bits carried in the plurality of subcarrier groups. In other words, after the data bits of the one spatial stream are divided into a plurality of data segments, a plurality of functional modules or a plurality of units process the plurality of data segments in parallel. Specifically, the plurality of LDPC subcarrier mappers perform, in parallel, LDPC subcarrier mapping on the data bits carried in the plurality of subcarrier groups, and each LDPC subcarrier mapper is configured to map a subcarrier in one subcarrier group.

If the RU allocated to the user equipment transmits only one spatial stream, space-time coding may be performed before step 130. A plurality of space-time block coding units perform space-time block coding on the subcarriers in the plurality of subcarrier groups in parallel. Each space-time block coding unit is configured to perform space-time block coding on a subcarrier in one subcarrier group. Space-time block coding is an optional step in the data field processing and sending process, and the optional step is performed before spatial and frequency mapping.

CSD processing may be performed on at least one subcarrier in at least one subcarrier group in the plurality of subcarrier groups before step 130. Specifically, at least one CSD unit performs CSD processing on at least one subcarrier in at least one subcarrier group, and one CSD unit is configured to process at least one subcarrier in one subcarrier group.

For example, the one spatial stream in step 110 is a spatial stream other than the first stream transmitted by the RU, and the transmitter may perform CSD processing on a subcarrier in each of the plurality of subcarrier groups.

For another example, the one spatial stream in step 110 is the first stream transmitted by the RU, and two streams are output after space-time block coding is performed on subcarriers obtained after constellation mapping. The transmitter may perform CSD processing on a subcarrier, in each subcarrier group, corresponding to the second stream in the two streams.

FIG. 13 is a schematic diagram of a transmission procedure of the transmitter. In a possible implementation, the transmitter divides the data bits after LDPC subcarrier mapping and before spatial and frequency mapping. It may be understood that the transmitter divides the data bits at the location of ② in FIG. 11B. Specifically, step 120 may include the following steps:
1203: The transmitter performs, by using an LDPC subcarrier mapper, LDPC subcarrier mapping on the data bits carried on the plurality of subcarriers, to obtain a plurality of subcarriers obtained after the LDPC subcarrier mapping.
1204: The transmitter divides the plurality of subcarriers, obtained after the LDPC subcarrier mapping, into a plurality of subcarrier groups by using a segment parser, where each subcarrier group includes one or more subcarriers obtained after the LDPC subcarrier mapping.

The plurality of subcarriers obtained after the LDPC subcarrier mapping carry data bits of one data stream. The segment parser divides the plurality of subcarriers, obtained after the LDPC subcarrier mapping, into a plurality of subcarrier groups, and also divides the data bits of one data stream into a plurality of data segments. Each of the plurality of subcarrier groups carries a data bit of one data segment.

If the RU allocated to the user equipment transmits only one spatial stream, space-time coding may be performed before step 130. A plurality of space-time block coding units perform space-time block coding on the subcarriers in the plurality of subcarrier groups in parallel. Each space-time block coding unit is configured to perform space-time block coding on a subcarrier in one subcarrier group. Space-time block coding is an optional step in the data field processing and sending process, and the optional step is performed before spatial and frequency mapping.

CSD processing may be performed on at least one subcarrier in at least one subcarrier group in the plurality of subcarrier groups before step 130. Specifically, at least one CSD unit performs CSD processing on at least one subcarrier in at least one subcarrier group, and one CSD unit is configured to process at least one subcarrier in one subcarrier group.

For example, the one spatial stream in step 110 is a spatial stream other than the first stream transmitted by the RU, and the transmitter may perform CSD processing on a subcarrier in each of the plurality of subcarrier groups.

For another example, the one spatial stream in step 110 is the first stream transmitted by the RU, and two streams are output after space-time block coding is performed on subcarriers obtained after constellation mapping. The transmitter may perform CSD processing on a subcarrier, in each subcarrier group, corresponding to the second stream in the two streams.

FIG. 14 is a schematic diagram of a transmission procedure of the transmitter. In a possible implementation, the RU allocated to the user equipment transmits only one spatial stream. The transmitter may perform division after LDPC subcarrier mapping and before spatial and frequency mapping. It may be understood that the transmitter performs division at the location of ③ in FIG. 11B. Specifically, step 120 may include the following steps:
1203: The transmitter performs, by using an LDPC subcarrier mapper, LDPC subcarrier mapping on the data bits carried on the plurality of subcarriers, to obtain a plurality of subcarriers obtained after the LDPC subcarrier mapping.
1205: The transmitter performs, by using an STBC unit, space-time block coding on the plurality of subcarriers obtained after the LDPC subcarrier mapping, to obtain a plurality of space-time block coded subcarriers.
1206: Divide, by using a segment parser, the plurality of space-time block coded subcarriers into the plurality of subcarrier groups.

In this way, division is performed after the space-time block coding, so that there is no need to deploy a plurality of space-time block coding units in the transmitter, and a quantity of functional modules that need to be deployed in the data field processing and sending process can be effectively reduced.

CSD processing may be performed on at least one subcarrier in at least one subcarrier group in the plurality of subcarrier groups before step 130. Specifically, at least one CSD unit performs CSD processing on at least one subcarrier in at least one subcarrier group, and one CSD unit is configured to process at least one subcarrier in one subcarrier group.

In this embodiment, the one spatial stream in step 110 is the first stream transmitted by the RU, and two streams are output after space-time block coding is performed on subcarriers obtained after constellation mapping. The transmitter may perform CSD processing on a subcarrier, in each subcarrier group, corresponding to the second stream in the two streams.

FIG. 15 is a schematic diagram of a transmission procedure of the transmitter. In a possible implementation, the transmitter may divide the data bits after the CSD processing and before frequency mapping. Specifically, step 120 may include the following steps:
1203: The transmitter performs, by using an LDPC subcarrier mapper, LDPC subcarrier mapping on the data bits carried on the plurality of subcarriers, to obtain a plurality of subcarriers obtained after the LDPC subcarrier mapping.
1207: The transmitter performs, by using a CSD unit, CSD processing on at least one subcarrier in the plurality of subcarriers obtained after the LDPC subcarrier mapping.
1208: The transmitter divides the plurality of subcarriers into the plurality of subcarrier groups by using a segment parser.

Subcarriers in the plurality of subcarrier groups carry the data bits of the one spatial stream in step 110. When dividing the plurality of subcarriers into the plurality of subcarrier groups by using the segment parser, the transmitter also divides the data bits of the one spatial stream into a plurality of data segments, and one subcarrier group carries a data bit of one of the data segments.

After step 1203 and step 1207, in the data bits carried on the plurality of subcarriers, there are data bits carried on at least some subcarriers receiving CSD processing. The plurality of subcarriers may include some subcarriers carrying data bits on which CSD processing has been performed and some subcarriers carrying data bits on which LDPC subcarrier mapping has been performed but CSD processing has not been performed. Alternatively, CSD processing has been performed on all data bits carried on the plurality of subcarriers.

For example, one spatial stream in step 110 is a spatial stream other than the first stream transmitted by the RU, and the transmitter may perform CSD processing on subcarriers in each subcarrier group in the plurality of subcarrier groups.

For another example, one spatial stream in step 110 is the first stream transmitted by the RU, and two streams are output after space-time block coding is performed on data bits carried on subcarriers obtained after constellation mapping. The transmitter may perform CSD processing on a subcarrier that is in each subcarrier group and that is corresponding to the second stream in the two streams.

It should be understood that in a scenario in which $\left⌈N/X\right⌉$ corresponding to an RU of a stream of user equipment is equal to or less than 1 and F=1, the transmitter does not need to perform division.

2. A scenario in which $\left⌈N/X\right⌉$ corresponding to an RU allocated to user equipment is greater than 1 is used as an example for description.

An embodiment of this application further provides another stream parsing method, applied to a scenario in which $\left⌈N/X\right⌉$ corresponding to an RU of a stream of user equipment is greater than 1 and $\left⌈N/X\right⌉$ is less than F. In this scenario, the transmitter may perform second-layer division. As shown in a flowchart in FIG. 16A, another stream parsing method provided in this embodiment of this application may include the following steps:
1610: A transmitter divides, by using a first-layer segment parser, one spatial stream output by a stream parser into $\left⌈N/X\right⌉$ substreams.
1620: The transmitter maps data bits of the $\left⌈N/X\right⌉$ substreams to subcarriers in the $\left⌈N/X\right⌉$ subcarrier groups by using $\left⌈N/X\right⌉$ constellation mappers, where one constellation mapper is configured to map a data bit of one substream to a subcarrier in one subcarrier group.

Specifically, the $\left⌈N/X\right⌉$ constellation mappers respectively map the data bits of the $\left⌈N/X\right⌉$ substreams to the subcarriers in the $\left⌈N/X\right⌉$ subcarrier groups, and one constellation mapper maps a data bit of one substream to a subcarrier in one subcarrier group.

More specifically, one constellation mapper modulates a data bit of one substream, and maps a data bit of one substream to BPSK, BPSK DCM, QPSK, QPSK DCM, 16QAM, 16-QAM DCM, 64QAM, or 256QAM constellation points. A data bit corresponding to one constellation point is carried on one subcarrier.

It may be understood that, in step 1610, while the one spatial stream is divided into the $\left⌈N/X\right⌉$ substreams, the data bits of the one spatial stream are also divided into a plurality of data segments. Each substream corresponds to one data segment. In step 1620, one subcarrier group carries a data bit of one data segment.

1630: The transmitter processes the subcarriers in the $\left⌈N/X\right⌉$ subcarrier groups into F subcarrier subgroups by using a second-layer segment parser, where each subcarrier subgroup includes a subcarrier obtained after LDPC subcarrier mapping, and the subcarrier obtained after LDPC subcarrier mapping carries data bits on which the LDPC subcarrier mapping has been performed.

It may be understood that, in step 1630, the segment parser divides, after constellation mapping and before LDPC subcarrier mapping, the subcarriers in the plurality of subcarrier groups carrying the data bits of the one spatial stream into a plurality of subcarrier subgroups, and at the same time, also divides the data bits of the one spatial stream into a plurality of data subsegments. Each of the plurality of subcarrier subgroups carries a data bit of one data segment.

The transmitter may perform second-layer division after constellation mapping and before LDPC subcarrier mapping; or the transmitter may perform division after LDPC subcarrier mapping and before spatial and frequency mapping. More specifically, that the transmitter performs division after LDPC subcarrier mapping and before spatial and frequency mapping may be that the transmitter performs division after LDPC subcarrier mapping and before space-time block coding. Alternatively, the transmitter may perform division after space-time block coding and before CSD processing, or may perform division after CSD processing and before spatial and frequency mapping.

1640: The transmitter maps, by using a spatial and frequency mapping unit, data bits carried on subcarriers in the F subcarrier subgroups to subcarriers in an RU allocated to one station within a bandwidth.

N is a quantity of subcarriers in the RU allocated to the user equipment, X is a quantity of subcarriers supported by one frequency domain segment, F is a quantity of frequency-domain consecutive intervals included in a frequency domain range covered by all subcarriers, corresponding to one spatial stream of the user equipment, of the RU allocated to the user equipment, and any two frequency-domain consecutive intervals are noncontiguous.

FIG. 16B is a schematic diagram of a transmission procedure of the transmitter. After stream parsing, the transmitter performs first-time segment parsing by using a first-layer segment parser. The transmitter may perform second-layer segment parsing (as shown in ① in FIG. 16B) by using a second-layer segment parser after constellation mapping and before LDPC subcarrier mapping; or the transmitter may perform second-layer division by using the second-layer segment parser after LDPC subcarrier mapping and before spatial and frequency mapping. More specifically, the transmitter performs second-layer division by using the second-layer segment parser after LDPC subcarrier mapping and before spatial and frequency mapping, for example, division is performed by using the second-layer segment parser after constellation mapping and before LDPC subcarrier mapping (as shown in ① in FIG. 16B), or may be performed after LDPC subcarrier mapping and before space-time block coding (as shown in ② in FIG. 16B), or may be performed after space-time block coding and before CSD processing (as shown in ③ in FIG. 16B), or may be performed after CSD processing and before spatial and frequency mapping (as shown at ④ in FIG. 16B).

After performing first-layer division and dividing the spatial stream output by the stream parser into $\left⌈N/X\right⌉$ substreams in step 1610, the transmitter processes the $\left⌈N/X\right⌉$ substreams by using a plurality of modules or a plurality of units. For example, the transmitter maps data bits of the $\left⌈N/X\right⌉$ substreams to subcarriers in the $\left⌈N/X\right⌉$ subcarrier groups by using $\left⌈N/X\right⌉$ constellation mappers, where one constellation mapper is configured to map a data bit of one substream to a subcarrier in one subcarrier group. The one constellation mapper may be understood as one module or one unit.

In a technical implementation of this application, the first-layer segment parser performs division based on $\left⌈N/X\right⌉$ instead of a quantity S of frequency domain segments occupied by the RU. In a distributed RU scenario, $\left⌈N/X\right⌉$ is likely to be greater than the quantity S of frequency domain segments occupied by the RU, so that a quantity of modules or units that need to be deployed in the transmitter can be reduced.

In addition, one spatial stream is not directly divided into F substreams during first-layer division, but the subcarriers in the $\left⌈N/X\right⌉$ subcarrier groups are divided into the F subcarrier subgroups only during second-layer division after the first-layer division. In this way, the quantity of modules that need to be deployed in the transmitter can be further reduced.

For example, in a schematic diagram of a scenario shown in FIG. 16C, an RU allocated to user equipment includes a distributed 2*996-tone RU. The distributed 2*996-tone RU is distributed on a 320 MHz bandwidth, and the 320 MHz bandwidth includes four frequency-domain consecutive intervals. In this case, $\left⌈N/X\right⌉$ of the distributed 2*996-tone RU is 2, and F is 4. In this way, when performing first-layer division in step 1610, the transmitter divides the one spatial stream output by the stream parser into two substreams, that is, divides bit data of the one spatial stream into two data segments; and when performing second-layer division in step 1630, the transmitter divides subcarriers in two subcarrier groups into four subcarrier subgroups, that is, divides data bits carried on the subcarriers in the two subcarrier groups into four data subsegments.

FIG. 16D-1 and FIG. 16D-2 are a schematic diagram of a transmission procedure of the transmitter. In some possible implementations, second-layer division is performed after constellation mapping and before LDPC subcarrier mapping. In other words, the transmitter performs second-layer division at the location of ① in FIG. 16B by using the second-layer segment parser. Specifically, step 1630 may include the following steps:
1631: The transmitter divides the subcarriers in the $\left⌈N/X\right⌉$ subcarrier groups into the F subcarrier subgroups by using the second-layer segment parser.

It may be understood that when the subcarriers in the $\left⌈N/X\right⌉$ subcarrier groups are divided into the F subcarrier subgroups, the data bits carried in the $\left⌈N/X\right⌉$ subcarrier groups are also divided into F data subsegments. Each subcarrier subgroup carries a data bit of one data subsegment. It may also be understood that during second-layer division, the transmitter divides the data bits of the one stream into F data subsegments.

1632: The transmitter performs, by using F LDPC subcarrier mappers, LDPC subcarrier mapping on the data bits carried in the F subcarrier subgroups, where each LDPC subcarrier mapper is configured to map data bits carried in one subcarrier subgroup.

After the subcarriers in the $\left⌈N/X\right⌉$ subcarrier groups are divided into the F subcarrier subgroups, F modules or F units process the subcarriers in the F subcarrier subgroups in parallel. In other words, after the data bits of the one spatial stream are divided into the F data subsegments, the F modules or the F units process the F data segments in parallel. Specifically, the F LDPC subcarrier mappers perform LDPC subcarrier mapping on subcarriers in the plurality of subcarrier subgroups in parallel, and each LDPC subcarrier mapper is configured to map a subcarrier in one subcarrier subgroup.

It can be seen from the resource allocation scenario shown in FIG. 16C that, the RU allocated to the user equipment includes a distributed 2*996-tone RU. The distributed 2*996-tone RU is distributed on the 320 MHz bandwidth, and the 320 MHz bandwidth includes four frequency-domain consecutive intervals. In this case, $\left⌈N/X\right⌉$ of the distributed 2*996-tone RU is 2, and F is 4. FIG. 16D-1 and FIG. 16D-2 are a schematic diagram of a transmission procedure of the transmitter. When performing first-layer division in step 1610, the transmitter divides the one spatial stream output by the stream parser into two substreams, that is, divides bit data of the one spatial stream into two data segments; and when performing second-layer division in step 1630, the transmitter divides subcarriers in two subcarrier groups into four subcarrier subgroups, that is, divides data bits carried on the subcarriers in the two subcarrier groups into four data subsegments.

Optionally, if the RU allocated to the user equipment transmits only one spatial stream, the transmitter may perform space-time coding before step 1640 and after step 1632. Specifically, a plurality of space-time block coding units of the transmitter perform space-time block coding on the subcarriers in the plurality of subcarrier subgroups in parallel. Each space-time block coding unit is configured to perform space-time block coding on a subcarrier in one subcarrier subgroup. Space-time block coding is an optional step in a data field processing and sending process, and the optional step is performed before spatial and frequency mapping.

Optionally, the transmitter may perform CSD processing on at least one subcarrier in at least one subcarrier subgroup in the plurality of subcarrier subgroups before step 1640 and after step 1632. Specifically, at least one CSD unit of the transmitter performs CSD processing on at least one subcarrier in at least one subcarrier subgroup, and one CSD unit is configured to process at least one subcarrier in one subcarrier subgroup.

For example, the one spatial stream in step 1610 is a spatial stream other than the first stream transmitted by the RU, and the transmitter may perform CSD processing on a subcarrier in each of the plurality of subcarrier groups.

For another example, the one spatial stream in step 1610 is the first stream transmitted by the RU, and two streams are output after space-time block coding is performed on subcarriers obtained after constellation mapping. The transmitter may perform CSD processing on a subcarrier, in each subcarrier group, corresponding to the second stream in the two streams.

FIG. 16E-1 and FIG. 16E-2 are a schematic diagram of a transmission procedure of the transmitter. In another possible implementation, division is performed after LDPC subcarrier mapping and before spatial and frequency mapping. In other words, the transmitter performs second-layer division at the location of ① in FIG. 16B by using the second-layer segment parser. Specifically, step 1630 may include the following steps:
1633: Perform, by using $\left⌈N/X\right⌉$ LDPC subcarrier mappers, LDPC subcarrier mapping on data bits carried on the subcarriers in the $\left⌈N/X\right⌉$ subcarrier groups, so that the subcarriers in the $\left⌈N/X\right⌉$ subcarrier groups are subcarriers obtained after the LDPC subcarrier mapping.

Each LDPC subcarrier mapper is configured to perform LDPC subcarrier mapping on a data bit carried on a subcarrier in one subcarrier group.

1634: Divide the subcarriers in the $\left⌈N/X\right⌉$ subcarrier groups into the F subcarrier subgroups by using the second-layer segment parser, where each subcarrier subgroup includes a subcarrier obtained after the LDPC subcarrier mapping.

Compared with a manner of dividing a plurality of subcarriers into F subcarrier groups at one time, in this implementation, division is performed after LDPC subcarrier mapping and before spatial and frequency mapping by using the second-layer segment parser, and the subcarriers in the $\left⌈N/X\right⌉$ subcarrier groups are divided into the F subcarrier subgroups, where $\left⌈N/X\right⌉$ is less than F. This reduces a quantity of LDPC subcarrier mappers.

Optionally, if the RU allocated to the user equipment transmits only one spatial stream, the transmitter may perform space-time coding before step 1640 and after step 1632. Specifically, a plurality of space-time block coding units of the transmitter perform space-time block coding on the subcarriers in the plurality of subcarrier subgroups in parallel. Each space-time block coding unit is configured to perform space-time block coding on a subcarrier in one subcarrier subgroup. Space-time block coding is an optional step in a data field processing and sending process, and the optional step is performed before spatial and frequency mapping.

Optionally, the transmitter may perform CSD processing on at least one subcarrier in at least one subcarrier subgroup in the plurality of subcarrier subgroups before step 1640 and after step 1632. Specifically, at least one CSD unit of the transmitter performs CSD processing on at least one subcarrier in at least one subcarrier subgroup, and one CSD unit is configured to process at least one subcarrier in one subcarrier subgroup.

For example, the one spatial stream in step 1610 is a spatial stream other than the first stream transmitted by the RU, and the transmitter may perform CSD processing on a subcarrier in each of the plurality of subcarrier groups.

For another example, the one spatial stream in step 1610 is the first stream transmitted by the RU, and two streams are output after space-time block coding is performed on subcarriers obtained after constellation mapping. The transmitter may perform CSD processing on a subcarrier, in each subcarrier group, corresponding to the second stream in the two streams.

FIG. 16F-1 and FIG. 16F-2 are a schematic diagram of a transmission procedure of the transmitter. In still another possible implementation, the RU allocated to the user equipment transmits only one spatial stream. The transmitter may perform division after space-time block coding and before CSD processing. In other words, the transmitter performs second-layer division at the location of ③ in FIG. 16B by using the second-layer segment parser. Specifically, step 1630 may include the following steps:
1633: The transmitter performs, by using [N/X] LDPC subcarrier mappers, LDPC subcarrier mapping on data bits carried on the subcarriers in the $\left⌈N/X\right⌉$ subcarrier groups, so that the subcarriers in the $\left⌈N/X\right⌉$ subcarrier groups are subcarriers obtained after the LDPC subcarrier mapping.

Each LDPC subcarrier mapper is configured to perform LDPC subcarrier mapping on a data bit carried on a subcarrier in one subcarrier group.

1635: The transmitter performs space-time block coding on the subcarriers in the $\left⌈N/X\right⌉$ subcarrier groups by using $\left⌈N/X\right⌉$ STBC units, where one STBC unit is configured to perform space-time block coding on a subcarrier in one subcarrier group.

1636: The transmitter divides the subcarriers in the $\left⌈N/X\right⌉$ subcarrier groups into the F subcarrier subgroups by using the second-layer segment parser, where a subcarrier included in each subcarrier subgroup is a space-time block coded subcarrier.

In this way, division is performed after the space-time block coding, so that there is no need to deploy a plurality of space-time block coding units in the transmitter, and a quantity of functional modules that need to be deployed in a data field processing and sending process can be effectively reduced.

Optionally, the transmitter may perform CSD processing on at least one subcarrier in at least one subcarrier subgroup in the plurality of subcarrier subgroups before step 1640 and after step 1634. Specifically, at least one CSD unit of the transmitter performs CSD processing on at least one subcarrier in at least one subcarrier subgroup, and one CSD unit is configured to process at least one subcarrier in one subcarrier subgroup.

For example, the one spatial stream in step 1610 is a spatial stream other than the first stream transmitted by the RU, and the transmitter may perform CSD processing on a subcarrier in each of the plurality of subcarrier groups.

For another example, the one spatial stream in step 1610 is the first stream transmitted by the RU, and two streams are output after space-time block coding is performed on subcarriers obtained after constellation mapping. The transmitter may perform CSD processing on a subcarrier, in each subcarrier group, corresponding to the second stream in the two streams.

FIG. 16G-1 and FIG. 16G-2 are a schematic diagram of a transmission procedure of the transmitter. In another possible implementation, division may be performed after CSD processing and before frequency mapping. Specifically, step 1630 may include the following steps:
1633: The transmitter performs, by using $\left⌈N/X\right⌉$ LDPC subcarrier mappers, LDPC subcarrier mapping on data bits carried on the subcarriers in the $\left⌈N/X\right⌉$ subcarrier groups, so that the subcarriers in the $\left⌈N/X\right⌉$ subcarrier groups are subcarriers obtained after the LDPC subcarrier mapping.

Each LDPC subcarrier mapper is configured to perform LDPC subcarrier mapping on a data bit carried on a subcarrier in one subcarrier group.

1637: The transmitter performs CSD processing on at least one subcarrier in at least one subcarrier group in the $\left⌈N/X\right⌉$ subcarrier groups by using at least one CSD unit, where one CSD unit is configured to perform CSD processing on at least one subcarrier in one subcarrier group.

1638: The transmitter divides the subcarriers in the $\left⌈N/X\right⌉$ subcarrier groups into the F subcarrier subgroups by using the second-layer segment parser.

After step 1633 and step 1637, at least one subcarrier in at least one subcarrier subgroup in the F subcarrier subgroups is a subcarrier obtained after the CSD processing. The data bits carried on the plurality of subcarriers may include some data bits, carried on the subcarriers, on which the CSD processing has been performed and some data bits, carried on the subcarriers, on which the LDPC subcarrier mapping has been performed but the CSD processing has not been performed; or the plurality of subcarriers are all data bits, carried on the subcarriers, on which the CSD processing has been performed.

For example, the one spatial stream in step 1610 is a spatial stream other than the first stream transmitted by the RU, and the transmitter may perform CSD processing on a subcarrier in each of the plurality of subcarrier groups.

For another example, the one spatial stream in step 1610 is the first stream transmitted by the RU, and two streams are output after space-time block coding is performed on subcarriers obtained after constellation mapping. The transmitter may perform CSD processing on a subcarrier, in each subcarrier group, corresponding to the second stream in the two streams.

In a scenario in which $\left⌈N/X\right⌉$ of an RU allocated to user equipment is greater than 1 and $\left⌈N/X\right⌉ = F$, only first-layer division needs to be performed, and second-layer division does not need to be performed. In a schematic flowchart shown in FIG. 17A, the data segment parsing method includes the following steps:
1710: A transmitter divides, by using a segment parser, data bits of one spatial stream output by a stream parser into F data segments.
1720: The transmitter maps, the data bits of the F data segments to subcarriers in F subcarrier groups by using F constellation mappers, where one constellation mapper is configured to map a data bit of one data segment to a subcarrier in one subcarrier group.

Specifically, FIG. 17B is a schematic diagram of a transmission procedure of the transmitter. The F constellation mappers respectively map the data bits of the F data segments to the subcarriers in the F subcarrier groups, and one constellation mapper maps a data bit of one data segment to a subcarrier in one subcarrier group. One subcarrier group carries a data bit of one data segment.

It may be understood that in step 1710, while the one spatial stream is divided into the F data segments, the one spatial stream is also divided into F substreams. Each substream corresponds to one data segment.

1730: The transmitter performs, by using F LDPC subcarrier mappers, LDPC subcarrier mapping on the data bits carried on the subcarriers in the F subcarrier groups.

1740: The transmitter maps, by using a spatial and frequency mapping unit, the data bits carried on the subcarriers in the F subcarrier groups to subcarriers in a resource unit RU allocated to one station within a bandwidth, where each frequency mapping unit is configured to map a subcarrier of one carrier group in the plurality of subcarrier groups.

It should be understood that, after the transmitter divides, by using the segment parser, the data bits of the one spatial stream output by the stream parser into the F data segments, F modules or F units (for example, the F LDPC subcarrier mappers) subsequently process the F data segments in parallel.

In this embodiment of this application, the transmitter performs division based on $\left⌈N/X\right⌉$ or F instead of a quantity of frequency domain segments occupied by the RU. In a distributed RU scenario, when $\left⌈N/X\right⌉$ or F is less than the quantity of frequency domain segments occupied by the RU, a quantity of subsequent modules can be reduced.

As shown in a schematic diagram of a scenario in FIG. 17C, an RU allocated to user equipment includes a distributed 2*996-tone RU, and the distributed 2*996-tone RU is distributed in two 160 MHz frequency-domain consecutive intervals. In other words, $\left⌈N/X\right⌉$ corresponding to the RU is equal to F, that is, 2. In this way, the transmitter performs only the first-layer division, and divides the one spatial stream output by the parser into F substreams, that is, divides the data bits of the one spatial stream into two data segments.

For a scenario in which $\left⌈N/X\right⌉ > F \geq 1$, segments need to be combined into F segments after first-layer division and before spatial and frequency mapping. When a data field is coded through LDPC coding, as shown in a schematic flowchart in FIG. 18A, a data segment parsing method includes the following steps:
1810: Divide, by using a segment parser, data bits of one spatial stream output by a stream parser into $\left⌈N/X\right⌉$ data segments.
1820: Map the data bits of the $\left⌈N/X\right⌉$ data segments to subcarriers in $\left⌈N/X\right⌉$ subcarrier groups by using $\left⌈N/X\right⌉$ constellation mappers, where one constellation mapper is configured to map a data bit of one data segment to a subcarrier in one subcarrier group.

Specifically, FIG. 18B is a schematic diagram of a transmission procedure of a transmitter. The $\left⌈N/X\right⌉$ constellation mappers respectively map the data bits of the $\left⌈N/X\right⌉$ data segments to the subcarriers in the $\left⌈N/X\right⌉$ subcarrier groups, and one constellation mapper maps a data bit of one data segment to a subcarrier in one subcarrier group. One subcarrier group carries a data bit of one data segment.

It may be understood that, in step 1810, while the data bits of the one spatial stream are divided into the $\left⌈N/X\right⌉$ data segments, the one spatial stream is also divided into a plurality of substreams. Each substream corresponds to one data segment.

1830: Perform, by using $\left⌈N/X\right⌉$ LDPC subcarrier mappers, LDPC subcarrier mapping on the data bits carried on the subcarriers in the $\left⌈N/X\right⌉$ subcarrier groups.

1840: combine the $\left⌈N/X\right⌉$ subcarrier groups into F subcarrier groups by using a segment deparser.

In other words, the $\left⌈N/X\right⌉$ data segments are combined into F data segments.

1850: Map, by using a spatial and frequency mapping unit, data bits carried on subcarriers in the F subcarrier groups to subcarriers in a resource unit RU allocated to one station within a bandwidth.

In this way, as there are F segments before the transmitter performs IDFT transform, the transmitter can process, by using F IDFT units, the subcarriers in the F subcarrier groups that carry the F data segments, where one IDFT unit processes a subcarrier in one subcarrier group.

As shown in a schematic diagram of a scenario in FIG. 18C, an RU allocated to user equipment includes a distributed 2*996-tone RU, and the distributed 2*996-tone RUs is distributed in 320 MHz frequency-domain consecutive intervals. In other words, $\left⌈N/X\right⌉$ corresponding to the RU is equal to 2, and F=1. In this way, the transmitter performs only first-layer division, and divides the data bits of the one spatial stream output by the parser into two data segments. After the transmitter performs, by using the $\left⌈N/X\right⌉$ LDPC subcarrier mappers, LDPC subcarrier mapping on subcarriers in two subcarrier groups that carry the two data segments, the transmitter combines the two subcarrier groups into one subcarrier group, that is, combines the two data segments into one data segment.

II. Specific implementations of segment parsing implementation 2 are described below with reference to embodiments.
1. A scenario in which $\left⌈N/X\right⌉$ corresponding to an RU allocated to user equipment is equal to or less than 1 is used as an example for description.

In this scenario, when a transmitter processes data bits of one stream of the user equipment by using data segment parsing implementation 2, the transmitter may divide the data bits by using step 610, step 620, and related detailed steps of step 610 in the foregoing embodiment.

Specifically, it is assumed that $\left⌈N/X\right⌉$ corresponding to an RU of a stream of user equipment is equal to or less than 1 and S>F, and a quantity of a plurality of subcarrier groups is F in step 610. After step 610 and before step 620, the method further includes the following step: The transmitter combines S subcarrier groups into F subcarrier groups by using a segment deparser. In this way, the transmitter can perform IDFT processing on subcarriers in the F subcarrier groups by using F IDFT units respectively, where one IDFT unit is configured to process a subcarrier in one subcarrier group, so that a frequency domain signal output by a spatial and frequency mapping unit can be better converted into a time domain signal.

For example, in a schematic diagram of a scenario shown in FIG. 19, there is a consecutive 160 MHz bandwidth, which is divided into two frequency domain segments in ascending order of frequencies. Each frequency domain segment includes an 80 MHz frequency domain resource. The RU allocated to the user equipment is a distributed 996-tone RU. Subcarriers in the distributed 996-tone RU are distributed in the two frequency domain segments. In other words, $\left⌈N/X\right⌉$ corresponding to the RU allocated to the user equipment is 1, S is 2, and F is 1. In this scenario, bit-interleaved data bits of the one spatial stream may be processed as two data segments carried in two subcarrier groups. It may be understood that a quantity of subcarrier groups is 2. The two subcarrier groups are combined into one subcarrier group after step 610 and before step 620. In other words, the two data segments are combined into one data segment. The one subcarrier group carries the one data segment. Then the transmitter may process subcarriers in the one subcarrier group by using an IDFT unit.

The segment deparser may combine a plurality of data segments into F data segments after LDPC subcarrier mapping and before IDFT processing. For example, the data segments may be combined after LDPC subcarrier mapping and before space-time transform; or the data segments may be combined after space-time transform and before frequency mapping.

When $\left⌈N/X\right⌉$ corresponding to the RU of a stream of the user equipment is equal to or less than 1, and S=F, the deparser may not be used to perform merging in a data segment parsing method.

2. A scenario in which $\left⌈N/X\right⌉$ corresponding to an RU allocated to user equipment is greater than 1 is used as an example for description.

When $\left⌈N/X\right⌉$ corresponding to an RU of a stream of user equipment is greater than 1, and S=F>1, the foregoing steps 1710 to 1740 may be used in a data segment parsing method.

In a schematic flowchart shown in FIG. 20, when $\left⌈N/X\right⌉$ corresponding to an RU corresponding to a stream of user equipment is greater than 1, and S>F≥1, a data segment parsing method includes the following steps:
2010: A transmitter divides, by using a first-layer segment parser, data bits of one spatial stream output by a stream parser into $\left⌈N/X\right⌉$ data segments.
2020: The transmitter maps data bits of the $\left⌈N/X\right⌉$ data segments to subcarriers in $\left⌈N/X\right⌉$ subcarrier groups by using $\left⌈N/X\right⌉$ constellation mappers, where one constellation mapper is configured to map a data bit of one data segment to a subcarrier in one subcarrier group.

Specifically, the $\left⌈N/X\right⌉$ constellation mappers of the transmitter respectively map the data bits of the $\left⌈N/X\right⌉$ data segments to the subcarriers in the $\left⌈N/X\right⌉$ subcarrier groups, and one constellation mapper maps a data bit of one data segment to a subcarrier in one subcarrier group.

2030: The transmitter processes the subcarriers in the $\left⌈N/X\right⌉$ subcarrier groups into S subcarrier subgroups by using a second-layer segment parser, where subcarriers in the S subcarrier subgroups are subcarriers obtained after LDPC subcarrier mapping.

Step 2230 is optional. If $S > \left⌈N/X\right⌉$, step 2020 is performed; or if $S = \left⌈N/X\right⌉$, step 2230 may not be performed.

It may be understood that when processing the subcarriers in the $\left⌈N/X\right⌉$ subcarrier groups into the S subcarrier subgroups, the transmitter also processes, into S data subsegments, the data bits of the one spatial stream carried on the subcarriers in the $\left⌈N/X\right⌉$ subcarrier groups, where a subcarrier in one subcarrier subgroup carries a data bit of one data segment.

2040: The transmitter combines the S subcarrier subgroups into F subcarrier groups by using a segment deparser.

2050: The transmitter maps, by using a spatial and frequency mapping unit, data bits carried on subcarriers in the F subcarrier groups to subcarriers in a resource unit RU allocated to one station within a bandwidth.

In this implementation of using two levels of segment parsers, the first-layer segment parser performs first-layer division on the data bits of the one spatial stream based on $\left⌈N/X\right⌉$ corresponding to the RU allocated to the user equipment, that is, divides the data bits of the one spatial stream into the $\left⌈N/X\right⌉$ data segments; and after constellation mapping, the second-layer segment parser of the transmitter further divides the data bits of the one spatial stream into the S data subsegments. This delays a time point of dividing the data bits of the one spatial stream into the S data subsegments, and helps reduce a quantity of modules that need to be deployed in the transmitter.

As shown in the schematic diagram of the scenario in FIG. 17C, an RU allocated to user equipment is a distributed 2*996-tone RU, the distributed 2*996-tone RU is distributed on a 160+160 MHz bandwidth, and the 160+160 MHz bandwidth includes four frequency domain segments. In other words, $\left⌈N/X\right⌉$ corresponding to the RU allocated to the user equipment is 2, F is 2, and S is 4. In such a scenario, the transmitter first performs step 2010 to divide, by using the first-layer segment parser, one spatial stream output by the stream parser into two data segments; and then performs step 2020 to map data bits of the two data segments to subcarriers in two subcarrier groups by using two constellation mappers, where one constellation mapper is configured to map a data bit of one data segment to a subcarrier in one subcarrier group. Then, the transmitter performs step 2030 to process the subcarriers in the two subcarrier groups into four subcarrier subgroups by using the second-layer segment parser, where subcarriers in the four subcarrier subgroups are subcarriers obtained after LDPC subcarrier mapping, and each subcarrier subgroup carries a data bit of one data subsegment. Finally, the transmitter performs step 2040 to combine the four subcarrier subgroups into two subcarrier groups by using the segment deparser, that is, four data segments carried by the subcarriers in the four subcarrier groups are combined into two data segments, which are respectively carried in the two subcarrier groups output by the segment deparser.

III. Specific implementations of data segment parsing implementation 3 are described below with reference to an embodiment.

Referring to a schematic flowchart in FIG. 21, a data segment parsing method includes the following steps:
2110: A transmitter divides, by using a segment parser, one spatial stream output by a stream parser into S data segments.

It should be understood that when dividing the one spatial stream into the S data segments, the segment parser also divides the spatial stream into S substreams, and each substream corresponds to one data segment.

2110 is an optional step, and may not be performed when S is equal to 1. When S>1, step 2110 is performed to divide the data segments of the one spatial stream into S data segments.

2120: The transmitter performs bit interleaving on data bits of the S data segments by using S BCC interleavers.

2130: The transmitter maps bit-interleaved data bits of the S data segments to S subcarrier groups by using S constellation mappers. One constellation mapper maps a bit-interleaved data bit of one data segment to one subcarrier group.

It should be understood that, one of the S subcarrier groups carries a data bit of one data segment.

2140: In the case of S>F, the transmitter combines the S subcarrier groups into F subcarrier groups by using a segment deparser.

Step 2140 is optional, and may not be performed when S=F.

2150: The transmitter maps, by using a spatial and frequency mapping unit, subcarriers in the F subcarrier groups to subcarriers in an RU allocated to one station within a bandwidth.

In this way, the data bits of the one spatial stream are distributed into the S data segments, so that a single module of the transmitter can process fewer data bits. This helps improve processing efficiency of the transmitter.

As shown in the schematic diagram of the scenario in FIG. 17C, an RU allocated to user equipment is a distributed 2*996-tone RU, the distributed 2*996-tone RU is distributed on a 160+160 MHz bandwidth, and the 160+160 MHz bandwidth includes four frequency domain segments. In other words, $\left⌈N/X\right⌉$ corresponding to the RU allocated to the user equipment is 2, F is 2, and S is 4. In such a scenario, the transmitter first performs step 2010 to divide, by using a first-layer segment parser, one spatial stream output by the stream parser into four data segments; and then performs steps 2120 and 2130 to obtain four subcarrier groups that carry the four data segments. Then, the transmitter performs step 2140 to combine S subcarriers into two subcarrier groups by using a segment deparser, that is, S data segments are also combined into two data segments. Finally, the transmitter maps, by using the spatial and frequency mapping unit, subcarriers in the two subcarrier groups to subcarriers in a resource unit RU allocated to one station within a bandwidth.

It should be understood that the foregoing steps 2110 to 2150 are included in a processing procedure when a data field is coded through BCC coding. When the data field is coded through LDPC coding, step 2120 and step 2130 may be replaced with the following steps:
2121: The transmitter performs constellation mapping on data bits of the S data segments by using S constellation mappers, to map the data bits to a plurality of subcarriers.
2131: The transmitter performs, by using an LDPC subcarrier mapper, LDPC subcarrier mapping on data bits carried on the plurality of subcarriers.

IV Specific implementations of segment parsing implementation 4 are described below with reference to an embodiment.

Referring to a schematic flowchart shown in FIG. 22, a data segment parsing method according to another embodiment of this application includes the following steps.

2210: A transmitter divides one spatial stream output by a stream parser into F data segments by using a segment parser.

2220: The transmitter performs bit interleaving on data bits of the F data segments by using F BCC interleavers.

2230: The transmitter maps bit-interleaved data bits of the F data segments to F subcarrier groups by using F constellation mappers. One constellation mapper maps a bit-interleaved data bit of one data segment to one subcarrier group.

2240: The transmitter maps, by using a spatial and frequency mapping unit, data bits carried on subcarriers in the F subcarrier groups to subcarriers in an RU allocated to one station within a bandwidth.

It may be understood that in this implementation, a basis of division into data segments is irrelevant to a basis of division of the frequency domain segment. For example, as shown in FIG. 17C, a 320 MHz bandwidth includes two 160 MHz bands, and the two 160 MHz bands are noncontiguous. The 320 MHz bandwidth includes four frequency domain segments, which are respectively the first 80 MHz, the second 80 MHz, the third 80 MHz, and the fourth 80 MHz in ascending order of frequencies. An RU allocated to user equipment is a distributed 2*996-tone RU, and subcarriers in the distributed 2*996-tone RU cover the 320 MHz bandwidth. In this case, F corresponding to the RU is 2, and S is 4.

When performing division on data bits according to segment parsing implementation 4, the transmitter divides, by using the segment parser, one spatial stream output by the stream parser into two data segments. In this way, a quantity of data segments is relevant only to F, and is irrelevant to a quantity of frequency domain segments occupied by the subcarriers in the RU. For a specific division process in this example, refer to FIG. 17B.

It can be learned that in such implementation, during division of the data bits, only one level of segment parser is required and no segment deparser is required. This can effectively reduce a quantity of modules that need to be deployed in the transmitter.

It should be understood that the foregoing steps 2210 to 2240 are included in a processing procedure when a data field is coded through BCC coding. When the data field is coded through LDPC coding, step 2220 and step 2230 may be replaced with the following steps:
2221: The transmitter performs constellation mapping on data bits of S data segments by using S constellation mappers, to map the data bits to a plurality of subcarriers.
2231: The transmitter performs, by using an LDPC subcarrier mapper, LDPC subcarrier mapping on data bits carried on the plurality of subcarriers.

FIG. 23 is a schematic diagram of a structure of a transmitter. An embodiment of this application further provides a transmitter, including:
a segment parsing unit, configured to process bit-interleaved data bits of one spatial stream into a plurality of data segments carried in a plurality of subcarrier groups, where each subcarrier group includes one or more subcarriers, and a subcarrier in each subcarrier group carries a data bit of one of the data segments; and
a spatial and frequency mapping unit, configured to map the plurality of data segments carried in the plurality of subcarrier groups to subcarriers in a resource unit RU allocated to one station within a bandwidth.

As shown in FIG. 6B-1, a BBC interleaver and a constellation mapper may be understood as a portion of a segment parsing unit. In other words, the segment parsing unit includes the BBC interleaver and the constellation mapper. In this embodiment, the segment parsing unit further includes a segment parser.

Optionally, the subcarriers in the RU cover a plurality of segments of frequency domain resources, each segment of frequency domain resources include a plurality of consecutive subcarriers, any two segments of frequency domain resources are noncontiguous, and a quantity of the plurality of subcarrier groups is a quantity of the plurality of segments of frequency domain resources.

Optionally, the subcarriers in the RU cover a plurality of frequency domain segments on the bandwidth, and a quantity of the plurality of subcarrier groups is a quantity of the plurality of frequency domain segments.

As shown in FIG. 7, in some embodiments, the segment parsing unit includes:
a segment parser, configured to divide the bit-interleaved data bits of the one spatial stream into a plurality of data segments; and
a plurality of constellation mappers, configured to map the data bits of the plurality of data segments to subcarriers in the plurality of subcarrier groups, where each subcarrier group carries a data bit of one data segment, and each constellation mapper is configured to perform constellation mapping on the data bit of one data segment.

In some embodiments, the segment parsing unit includes:
a constellation mapper, configured to map the bit-interleaved data bits of the one spatial stream to a plurality of subcarriers; and
a segment parser, configured to divide the plurality of subcarriers into the plurality of subcarrier groups, where the data bits of the one spatial stream are divided into a plurality of data segments and carried in the plurality of subcarrier groups, and each subcarrier group carries a data bit of one of the data segments.

As shown in FIG. 8, in some embodiments, the segment parsing unit includes:
a constellation mapper, configured to map the bit-interleaved data bits of the one spatial stream to a plurality of subcarriers;
a space-time block coding unit, configured to perform space-time block coding on the data bits carried on the plurality of subcarriers, to obtain a plurality of space-time block coded subcarriers; and
a segment parser, configured to divide the plurality of space-time block coded subcarriers into the plurality of subcarrier groups, where the data bits of the one spatial stream are divided into a plurality of data segments and carried in the plurality of subcarrier groups, and each subcarrier group carries a data bit of one of the data segments.

As shown in FIG. 9, in some embodiments, the segment parsing unit includes:
a constellation mapper, configured to map the bit-interleaved data bits of the one spatial stream to a plurality of subcarriers; and
a CSD unit, configured to perform CSD processing on a data bit carried on at least one subcarrier of the plurality of subcarriers; and
a segment parser, configured to divide the plurality of subcarriers into the plurality of subcarrier groups, where the data bits of the one spatial stream are divided into a plurality of data segments and carried in the plurality of subcarrier groups, and each subcarrier group carries a data bit of one of the data segments.

As shown in FIG. 10, in some embodiments, the RU allocated to the one station includes a distributed RU, and the distributed RU includes a plurality of discrete subcarriers in frequency domain.

It should be understood that the transmitter is provided based on a scenario in which a data field is coded through BCC coding. In a scenario in which LDPC coding is used for data coding, related steps of BCC coding in the data segment parsing method in the first aspect may be replaced with related steps of the LDPC coding. A related unit used for BCC coding of the transmitter is replaced with a related unit used for LDPC coding.

FIG. 24 is a schematic diagram of a structure of a transmitter. An embodiment of this application further provides another transmitter, including:
a first-layer segment parser, configured to divide data bits of one spatial stream output by a stream parser into $\left⌈N/X\right⌉$ data segments;
a constellation mapper, configured to map the data bits of the $\left⌈N/X\right⌉$ data segments to subcarriers in $\left⌈N/X\right⌉$ subcarrier groups, where a data bit of one data segment is mapped to a subcarrier in one subcarrier group;
a segment parsing unit, configured to divide all the subcarriers in the $\left⌈N/X\right⌉$ subcarrier groups into F subcarrier subgroups, where each subcarrier subgroup includes a subcarrier obtained after LDPC subcarrier mapping, the data bits of the one spatial stream are divided into a plurality of data subsegments and carried in the plurality of subcarrier subgroups, and each subcarrier group carries a data bit of one of the data subsegments; and the segment parsing unit includes a second-layer segment parser, where the second-layer segment parser is configured to divide the data bits into the plurality of data subsegments; and
a spatial and frequency mapping unit, configured to map a plurality of data segments carried on the subcarriers in the F subcarrier subgroups to subcarriers in an RU allocated to one station within a bandwidth, where

N is a quantity of subcarriers in the RU allocated to the one station, X is a quantity of subcarriers supported by one frequency domain segment, a quantity of subcarrier subgroups is F, the subcarriers in the RU cover F segments of frequency domain resources, each segment of frequency domain resources include a plurality of consecutive subcarriers, any two frequency domain resources are noncontiguous, and $F \geq \left⌈N/X\right⌉$.

In some embodiments, the RU allocated to the one station includes a distributed RU, and the distributed RU includes a plurality of discrete subcarriers in frequency domain.

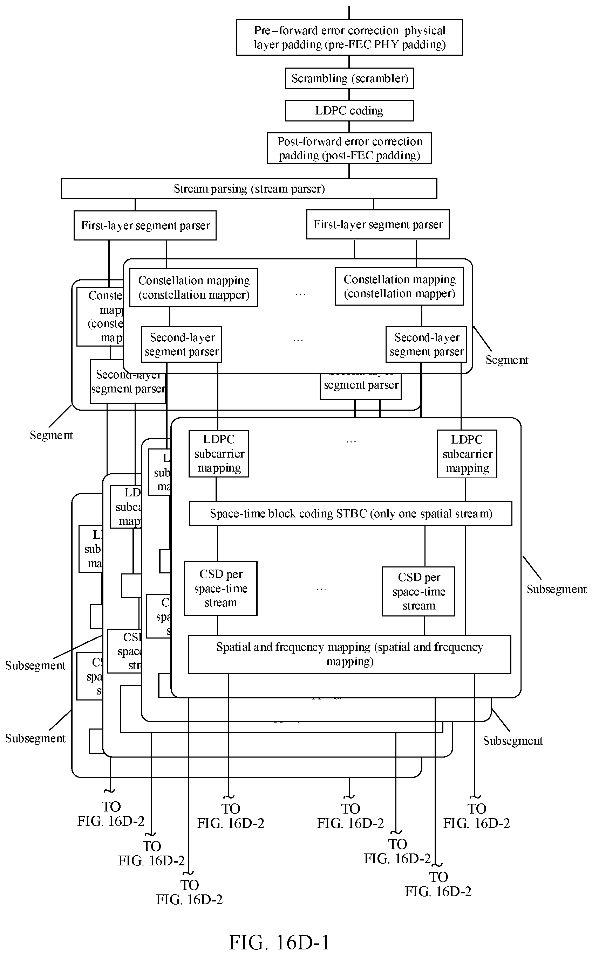

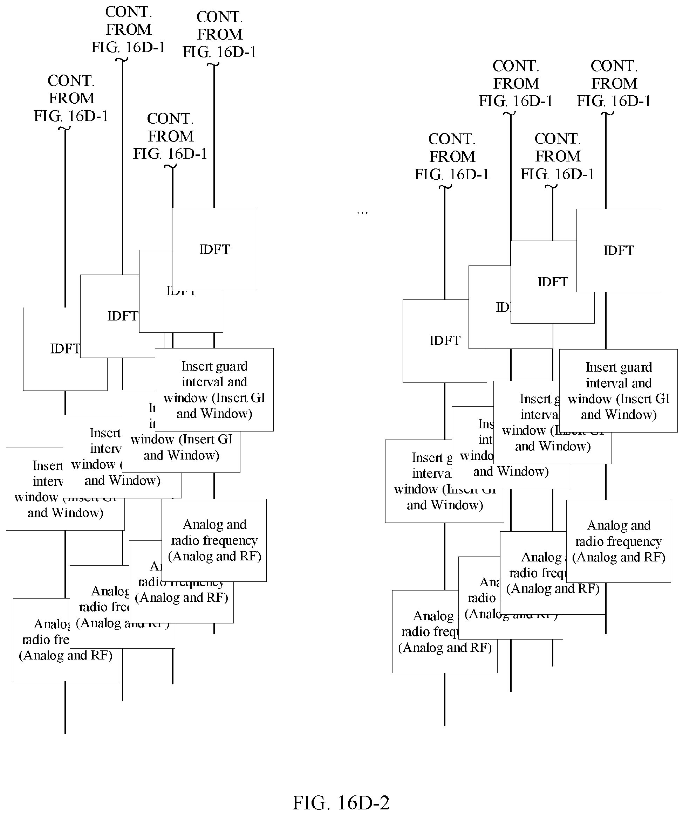

As shown in FIG. 16D-1, in some embodiments, the segment parsing unit includes:
a second-layer segment parser, configured to divide all the subcarriers in the $\left⌈N/X\right⌉$ subcarrier groups into F to-be-processed subcarrier subgroups; and

F LDPC subcarrier mappers, configured to perform LDPC subcarrier mapping on data bits carried on subcarriers in the F to-be-processed subcarrier subgroups, to obtain the F subcarrier subgroups, where one of the LDPC subcarrier mappers is configured to perform LDPC subcarrier mapping on a data bit carried on a subcarrier in one of the to-be-processed subcarrier subgroups.

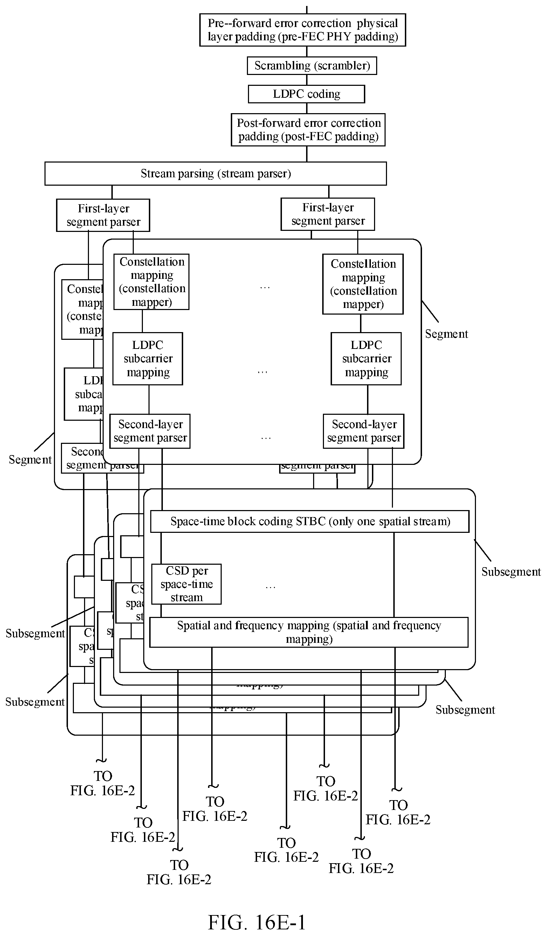

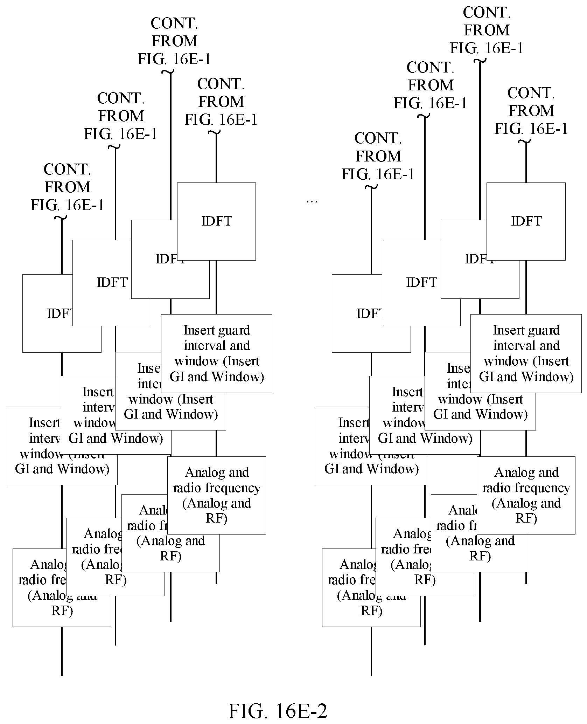

As shown in FIG. 16E-1, in some embodiments, the segment parsing unit includes:
an LDPC subcarrier mapper, configured to perform LDPC subcarrier mapping on a data bit carried on a subcarrier in each of the $\left⌈N/X\right⌉$ subcarrier groups, to obtain $\left⌈N/X\right⌉$ subcarrier groups obtained after the LDPC subcarrier mapping; and
a second-layer segment parser, configured to divide all subcarriers, in the $\left⌈N/X\right⌉$ subcarrier groups obtained after the LDPC subcarrier mapping, into the F subcarrier subgroups.

As shown in FIG. 16F-1 and FIG. 16F-2, in some embodiments, the segment parsing unit includes:
an LDPC subcarrier mapper, configured to perform LDPC subcarrier mapping on data bits carried on the subcarriers in the $\left⌈N/X\right⌉$ subcarrier groups;
a space-time block coding unit, configured to perform space-time block coding on the data bits carried on the subcarriers in the $\left⌈N/X\right⌉$ subcarrier groups, to obtain $\left⌈N/X\right⌉$ space-time block coded subcarrier groups; and
a second-layer segment parser, configured to divide all subcarriers in the space-time block coded $\left⌈N/X\right⌉$ subcarrier groups into the F subcarrier subgroups.

As shown in FIG. 16G-1 and FIG. 16G-2, in some embodiments, the segment parsing unit includes:
an LDPC subcarrier mapper, configured to perform LDPC subcarrier mapping on data bits carried on the subcarriers in the $\left⌈N/X\right⌉$ subcarrier groups;
a CSD unit, configured to perform CSD processing on a data bit carried on at least one subcarrier in at least one subcarrier group of the $\left⌈N/X\right⌉$ subcarrier groups; and
a second-layer segment parser, configured to divide all the subcarriers in the $\left⌈N/X\right⌉$ subcarrier groups into the F subcarrier subgroups.

It should be understood that related implementations and supplementary descriptions of embodiments of the data segment parsing method are also applicable to the transmitter in this embodiment of this application. Details are not described herein again.

An embodiment of this application further provides a computer-readable storage medium storing a computer program. When the computer-readable storage medium is executed by a computer, functions in any one of the foregoing method embodiments are implemented.

An embodiment of this application further provides a computer program product. When the computer program product is executed by a computer, functions in any one of the foregoing method embodiments are implemented.

An embodiment of this application further provides a chip system. The chip system includes a processor and an interface, configured to support a communication transmission device in implementing a function of an access point or a station in any one of the foregoing method embodiments, for example, determining or processing at least one of data and information in the foregoing method. In a possible design, the chip system further includes a memory, and the memory is configured to store information and data that are necessary for the foregoing communication apparatus. The chip system may include a chip, or may include a chip and another distributed device.

An embodiment of this application provides a functional entity, and the functional entity is configured to implement the foregoing resource scheduling method.

It should be further understood that "first", "second", "third", "fourth", and various numbers in this specification are merely used for differentiation for ease of description, and are not intended to limit the scope of this application.

It should be understood that the term "and/or" in this specification describes only an association relationship between associated objects, indicating that three relationships may exist. For example, A and/or B may indicate the following three cases: Only A exists, both A and B exist, and only B exists. In addition, the character "/" in this specification generally indicates an "or" relationship between the associated objects.

It should be understood that sequence numbers of the foregoing processes do not mean execution sequences in embodiments of this application. The execution sequences of the processes should be determined based on functions and internal logic of the processes, and should not constitute any limitation on implementation processes of the embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical implementations. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected based on an actual requirement to achieve the objectives of the implementations of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical implementations of this application essentially, or the part contributing to the current technology, or some of the technical implementations may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-only Memory, ROM), a random access memory (Random Access Memory, RAM), a magnetic disk, or an optical disc.

The steps of the method in embodiments of this application may be subject to sequence adjustment, combination, and deletion based on an actual requirement.

The modules in the apparatus in embodiments of this application may be combined, divided, and deleted based on an actual requirement.

In conclusion, the foregoing embodiments are merely intended for describing the technical implementations of this application, but not for limiting this application. Although this application is described in detail with reference to the foregoing embodiments, a person of ordinary skill in the art should understand that modifications to the technical implementations recorded in the foregoing embodiments or equivalent replacements to some technical features thereof may still be made. These modifications or replacements do not make the essence of the corresponding technical implementations depart from the scope of the technical implementations of embodiments of this application. The invention is defined in the appended claims.

## Claims

1. A data segment parsing method, executed by a transmitter, comprising:
dividing (1610), by using a first-layer segment parser, data bits of one spatial stream output by a stream parser into [N/X] data segments;
mapping (1620) the data bits of the [N/X] data segments to subcarriers in [N/X] subcarrier groups by using a constellation mapper, wherein a data bit of one data segment is mapped to a subcarrier in one subcarrier group;
dividing (1630) all the subcarriers in the [N/X] subcarrier groups into F subcarrier subgroups by using a second-layer segment parser, wherein each subcarrier subgroup comprises a subcarrier obtained after LDPC subcarrier mapping, the data bits of the one spatial stream are divided into a plurality of data subsegments and carried in the plurality of subcarrier subgroups, and each subcarrier group carries a data bit of one of the data subsegments; and
mapping (1640), by using a spatial and frequency mapping unit, a plurality of data segments carried on the subcarriers in the F subcarrier subgroups to subcarriers in an RU allocated to one station within a bandwidth, wherein
N is a quantity of subcarriers in the RU allocated to the one station, X is a quantity of subcarriers supported by one frequency domain segment, a quantity of subcarrier subgroups is F, the subcarriers in the RU cover F segments of frequency domain resources, each segment of frequency domain resources comprise a plurality of consecutive subcarriers, any two frequency domain resources are noncontiguous, and $F \geq \left⌈N/X\right⌉$.

2. The method according to claim 1, wherein the RU allocated to the one station comprises a distributed RU, and the distributed RU comprises a plurality of discrete subcarriers in frequency domain.

3. The method according to claim 1, wherein the dividing all the subcarriers in the [N/X] subcarrier groups into F subcarrier subgroups by using a second-layer segment parser comprises:
dividing all the subcarriers in the [N/X] subcarrier groups into F to-be-processed subcarrier subgroups by using the second-layer segment parser; and
performing, by using F LDPC subcarrier mappers, LDPC subcarrier mapping on data bits carried on subcarriers in the F to-be-processed subcarrier subgroups, to obtain the F subcarrier subgroups, wherein one of the LDPC subcarrier mappers is configured to perform LDPC subcarrier mapping on a data bit carried on a subcarrier in one of the to-be-processed subcarrier subgroups.

4. The method according to claim 1, wherein the dividing all the subcarriers in the [N/X] subcarrier groups into F subcarrier subgroups by using a second-layer segment parser comprises:
performing LDPC subcarrier mapping on a data bit carried on a subcarrier in each of the [N/X] subcarrier groups, to obtain [N/X] subcarrier groups obtained after the LDPC subcarrier mapping; and
dividing all subcarriers, in the [N/X] subcarrier groups obtained after the LDPC subcarrier mapping, into the F subcarrier subgroups by using a second-layer segment parser.

5. The method according to claim 1, wherein the dividing all the subcarriers in the [N/X] subcarrier groups into F subcarrier subgroups by using a second-layer segment parser comprises:
performing LDPC subcarrier mapping and space-time block coding on data bits carried on subcarriers in the [N/X] subcarrier groups, to obtain [N/X] space-time block coded subcarrier groups; and
dividing all subcarriers in the [N/X] space-time block coded subcarrier groups into the F subcarrier subgroups by using the second-layer segment parser.

6. The method according to claim 1, wherein the dividing all the subcarriers in the [N/X] subcarrier groups into F subcarrier subgroups by using a second-layer segment parser comprises:
performing LDPC subcarrier mapping on data bits carried on the subcarriers in the [N/X] subcarrier groups, and performing CSD processing on a data bit carried on at least one subcarrier in at least one subcarrier group of the [N/X] subcarrier groups; and
dividing all the subcarriers in the [N/X] subcarrier groups into the F subcarrier subgroups by using the second-layer segment parser.

7. A communication apparatus (200), comprising a processor (201) and a transmitter, wherein
when the processor (201) executes a computer program or instructions (204) in a memory (202), the method according to any one of claims 1 to 6 is performed.

8. A computer-readable storage medium, wherein the computer-readable storage medium stores computer instructions, which, when executed by a computer, instruct a communication apparatus (200) to perform the method according to any one of claims 1 to 6.

## Patentansprüche

1. Verfahren zum Parsen von Datensegmenten, ausgeführt durch einen Sender, das umfasst:
Aufteilen (1610), unter Verwendung eines Segmentparsers einer ersten Schicht, von Datenbits eines räumlichen Stroms, der durch einen Stromparser ausgegeben wird, in [N/X] Datensegmente;
Abbilden (1620) der Datenbits der [N/X] Datensegmente auf Subträger in [N/X] Subträgergruppen unter Verwendung eines Konstellationsabbilders, wobei ein Datenbit eines Datensegments auf einen Subträger in einer Subträgergruppe abgebildet wird;
Aufteilen (1630) aller der Subträger in den [N/X] Subträgergruppen in F Subträgersubgruppen unter Verwendung eines Segmentparsers der zweiten Schicht, wobei jede Subträgersubgruppe einen Subträger umfasst, der nach der LDPC-Subträgerabbildung erhalten wird, die Datenbits des einen räumlichen Stroms in eine Vielzahl von Datensubsegmenten unterteilt und in der Vielzahl von Subträgersubgruppen getragen werden, und jede Subträgergruppe ein Datenbit eines der Datensubsegmente trägt; und
Abbilden (1640), unter Verwendung einer Raum- und Frequenzabbildungseinheit, einer Vielzahl von Datensegmenten, die auf den Subträgern in den F Subträgersubgruppen getragen werden, auf Subträger in einer RU, die einer Station innerhalb einer Bandbreite zugeordnet ist, wobei
N eine Anzahl von Subträgern in der RU, die der einen Station zugeordnet sind, ist, X eine Anzahl von Subträgern, die durch ein Frequenzbereichssegment unterstützt werden, ist, eine Anzahl von Subträgersubgruppen F ist, die Subträger in der RU F Segmente von Frequenzbereichsressourcen abdecken, jedes Segment von Frequenzbereichsressourcen eine Vielzahl von aufeinanderfolgenden Subträgern umfasst, beliebige zwei Frequenzbereichsressourcen nicht zusammenhängend sind, und F≥[N/X].

2. Verfahren nach Anspruch 1, wobei die RU, die der einen Station zugeordnet ist, eine verteilte RU umfasst, und die verteilte RU eine Vielzahl von diskreten Subträgern in dem Frequenzbereich umfasst.

3. Verfahren nach Anspruch 1, wobei das Aufteilen aller der Subträger in den [N/X] Subträgergruppen in F Subträgersubgruppen unter Verwendung eines Segmentparsers der zweiten Schicht umfasst
Aufteilen aller der Subträger in den [N/X] Subträgergruppen in F zu verarbeitende Subträgersubgruppen unter Verwendung des Segmentparsers der zweiten Schicht; und Durchführen, unter Verwendung von F LDPC-Subträgerabbildern, eines LDPC-Subträgerabbildens auf Datenbits, die auf Subträgern in den F zu verarbeitenden Subträgersubgruppen getragen werden, um die F Subträgersubgruppen zu erhalten, wobei einer der LDPC-Subträgerabbilder konfiguriert ist, um ein LDPC-Subträgerabbilden auf ein Datenbit, das auf einem Subträger in einer der zu verarbeitenden Subträgersubgruppen getragen wird, durchzuführen.

4. Verfahren nach Anspruch 1, wobei das Aufteilen aller der Subträger in den [N/X] Subträgergruppen in F Subträgersubgruppen unter Verwendung eines Segmentparsers der zweiten Schicht umfasst:
Durchführen eines LDPC-Subträgerabbildens auf ein Datenbit, das auf einem Subträger in jeder der [N/X] Subträgergruppen getragen wird, um [N/X] Subträgergruppen zu erhalten, die nach dem LDPC-Subträgerabbilden erhalten werden; und
Aufteilen aller der Subträger in den [N/X] Subträgergruppen, die nach dem LDPC-Subträgerabbilden erhalten werden, in die F Subträgersubgruppen unter Verwendung eines Segmentparsers der zweiten Schicht.

5. Verfahren nach Anspruch 1, wobei das Aufteilen aller der Subträger in den [N/X] Subträgergruppen in F Subträgersubgruppen unter Verwendung eines Segmentparsers der zweiten Schicht umfasst:
Durchführen eines LDPC-Subträgerabbildens und einer Raum-Zeit-Blockcodierung an Datenbits, die auf Subträgern in den [N/X] Subträgergruppen getragen werden, um [N/X] Raum-Zeit-blockcodierte Subträgergruppen zu erhalten; und
Aufteilen aller der Subträger in den [N/X] Raum-Zeit-blockcodierten Subträgergruppen in die F Subträgersubgruppen unter Verwendung des Segmentparsers der zweiten Schicht.

6. Verfahren nach Anspruch 1, wobei das Aufteilen aller der Subträger in den [N/X] Subträgergruppen in F Subträgersubgruppen unter Verwendung eines Segmentparsers der zweiten Schicht umfasst:
Durchführen eines LDPC-Subträgerabbildens auf Datenbits, die auf den Subträgern in den [N/X] Subträgergruppen getragen werden, und Durchführen eines CSD-Verarbeitens für ein Datenbit, das auf mindestens einem Subträger in mindestens einer Subträgergruppe der [N/X] Subträgergruppen getragen wird; und
Aufteilen aller der Subträger in den [N/X] Subträgergruppen in die F Subträgersubgruppen unter Verwendung des Segmentparsers der zweiten Schicht.

7. Kommunikationseinrichtung (200), die einen Prozessor (201) und einen Sender umfasst, wobei wenn der Prozessor (201) ein Computerprogramm oder Anweisungen (204) in einem Speicher (202) ausführt, das Verfahren nach einem der Ansprüche 1 bis 6 durchgeführt wird.

8. Computerlesbares Speichermedium, wobei das computerlesbare Speichermedium Computeranweisungen speichert, die, wenn sie durch einen Computer ausgeführt werden, eine Kommunikationseinrichtung (200) anweisen, das Verfahren nach einem der Ansprüche 1 bis 6 durchzuführen.

## Revendications

1. Procédé d'analyse de segment de données, exécuté par un émetteur, comprenant :
la division (1610), en utilisant un analyseur de segment de première couche, de bits de données d'un flux spatial émis par un analyseur de flux en [N/X] segments de données ;
le mappage (1620) des bits de données des [N/X] segments de données avec des sous-porteuses dans [N/X] groupes de sous-porteuses en utilisant un moyen de mappage de constellation, dans lequel un bit de données d'un segment de données est mappé avec une sous-porteuse dans un groupe de sous-porteuses ;
la division (1630) de toutes les sous-porteuses dans les [N/X] groupes de sous-porteuses en F sous-groupes de sous-porteuses en utilisant un analyseur de segment de seconde couche, dans lequel chaque sous-groupe de sous-porteuses comprend une sous-porteuse obtenue après un mappage de sous-porteuses LDPC, les bits de données du flux spatial sont divisés en une pluralité de sous-segments de données et transportés dans la pluralité de sous-groupes de sous-porteuses, et chaque groupe de sous-porteuses transporte un bit de données de l'un des sous-segments de données ; et
le mappage (1640), en utilisant une unité de mappage spatial et fréquentiel, d'une pluralité de segments de données transportés sur les sous-porteuses dans les F sous-groupes de sous-porteuses avec des sous-porteuses dans une RU attribuée à une station dans une largeur de bande, dans lequel
N est une quantité de sous-porteuses dans la RU attribuée à la station, X est une quantité de sous-porteuses prises en charge par un segment dans le domaine fréquentiel, une quantité de sous-groupes de sous-porteuses est F, les sous-porteuses dans la RU couvrent F segments de ressources dans le domaine fréquentiel, chaque segment de ressources dans le domaine fréquentiel comprend une pluralité de sous-porteuses consécutives, deux ressources dans le domaine fréquentiel quelconques ne sont pas contiguës, et F ≥ [N/X].

2. Procédé selon la revendication 1, dans lequel la RU attribuée à la station comprend une RU distribuée, et la RU distribuée comprend une pluralité de sous-porteuses discrètes dans le domaine fréquentiel.

3. Procédé selon la revendication 1, dans lequel la division de toutes les sous-porteuses dans les [N/X] groupes de sous-porteuses en F sous-groupes de sous-porteuses en utilisant un analyseur de segment de seconde couche comprend :
la division de toutes les sous-porteuses dans les [N/X] groupes de sous-porteuses en F sous-groupes de sous-porteuses à traiter en utilisant l'analyseur de segment de seconde couche ; et
la réalisation, en utilisant F moyens de mappage de sous-porteuses LDPC, d'un mappage de sous-porteuses LDPC avec des bits de données transportés sur des sous-porteuses dans les F sous-groupes de sous-porteuses à traiter, pour obtenir les F sous-groupes de sous-porteuses, dans lequel l'un des moyens de mappage de sous-porteuses LDPC est configuré pour réaliser un mappage de sous-porteuses LDPC sur un bit de données transporté sur une sous-porteuse dans l'un des sous-groupes de sous-porteuses à traiter.

4. Procédé selon la revendication 1, dans lequel la division de toutes les sous-porteuses dans les [N/X] groupes de sous-porteuses en F sous-groupes de sous-porteuses en utilisant un analyseur de segment de seconde couche comprend :
la réalisation d'un mappage de sous-porteuses LDPC sur un bit de données transporté sur une sous-porteuse dans chacun des [N/X] groupes de sous-porteuses, afin d'obtenir [N/X] groupes de sous-porteuses obtenus après le mappage de sous-porteuses LDPC ; et
la division de toutes les sous-porteuses, dans les [N/X] groupes de sous-porteuses obtenus après le mappage de sous-porteuses LDPC, en F sous-groupes de sous-porteuses en utilisant un analyseur de segment de seconde couche.

5. Procédé selon la revendication 1, dans lequel la division de toutes les sous-porteuses dans les [N/X] groupes de sous-porteuses en F sous-groupes de sous-porteuses en utilisant un analyseur de segment de seconde couche comprend :
la réalisation d'un mappage de sous-porteuses LDPC et d'un codage en blocs spatio-temporel sur des bits de données transportés sur des sous-porteuses dans les [N/X] groupes de sous-porteuses, pour obtenir [N/X] groupes de sous-porteuses codés par codage en blocs spatio-temporel ; et
la division de toutes les sous-porteuses dans les [N/X] groupes de sous-porteuses codés par codage en blocs spatio-temporel en F sous-groupes de sous-porteuses en utilisant l'analyseur de segment de seconde couche.

6. Procédé selon la revendication 1, dans lequel la division de toutes les sous-porteuses dans les [N/X] groupes de sous-porteuses en F sous-groupes de sous-porteuses en utilisant un analyseur de segment de seconde couche comprend :
la réalisation d'un mappage de sous-porteuses LDPC sur des bits de données transportés sur les sous-porteuses dans les [N/X] groupes de sous-porteuses, et la réalisation d'un traitement CSD sur un bit de données transporté sur au moins une sous-porteuse dans au moins un groupe de sous-porteuses des [N/X] groupes de sous-porteuses ; et
la division de toutes les sous-porteuses dans les [N/X] groupes de sous-porteuses en F sous-groupes de sous-porteuses en utilisant l'analyseur de segment de seconde couche.

7. Appareil de communication (200), comprenant un processeur (201) et un émetteur, dans lequel lorsque le processeur (201) exécute un programme informatique ou des instructions (204) dans une mémoire (202), le procédé selon l'une quelconque des revendications 1 à 6 est réalisé.

8. Support de stockage lisible par ordinateur, dans lequel le support de stockage lisible par ordinateur stocke des instructions informatiques qui, lorsqu'elles sont exécutées par un ordinateur, ordonnent à un appareil de communication (200) de réaliser le procédé selon l'une quelconque des revendications 1 à 6.
